(19) Europäisches Patentamt / European Patent Office / Office européen des brevets

(11) **EP 3 729 396 B1**

(12) **FASCICULE DE BREVET EUROPEEN**

(45) Date de publication et mention
de la délivrance du brevet:
**23.10.2024 Bulletin 2024/43**

(21) Numéro de dépôt: **18833978.2**

(22) Date de dépôt: **18.12.2018**

(51) Classification Internationale des Brevets (IPC):
**G08G 1/00** *(2006.01)* **G05D 1/00** *(2024.01)*

(52) Classification Coopérative des Brevets (CPC):
**G08G 1/22; G05D 1/0293; G05D 1/0297**

(86) Numéro de dépôt international:
**PCT/FR2018/053383**

(87) Numéro de publication internationale:
**WO 2019/122695 (27.06.2019 Gazette 2019/26)**

(54) **PROCÉDÉ DE GESTION D'UN PELOTON DE CAMIONS A PARTIR D'INFORMATIONS RELATIVES AUX PNEUMATIQUES EQUIPANT LES CAMIONS DUDIT PELOTON**

VERFAHREN ZUR VERWALTUNG EINER KOLONNE VON LASTKRAFTWAGEN AUF BASIS VON INFORMATIONEN IM ZUSAMMENHANG MIT DEN REIFEN, MIT DENEN DIE LASTKRAFTWAGEN DER BESAGTEN KOLONNE AUSGERÜSTET SIND

METHOD FOR MANAGING A PLATOON OF TRUCKS ON THE BASIS OF INFORMATION RELATING TO THE TYRES WITH WHICH THE TRUCKS OF SAID PLATOON ARE EQUIPPED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2017 FR 1762908**

(43) Date de publication de la demande:
**28.10.2020 Bulletin 2020/44**

(73) Titulaire: **COMPAGNIE GENERALE DES ETABLISSEMENTS MICHELIN**
**63000 Clermont-Ferrand (FR)**

(72) Inventeurs:
• **DOMPROBST, Frédéric**
**63040 CLERMONT-FERRAND CEDEX 9 (FR)**

• **FANGEAT, Nicolas**
**63040 CLERMONT-FERRAND CEDEX 9 (FR)**
• **LEDOUX, Thomas**
**63040 CLERMONT-FERRAND CEDEX 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**US-A- 5 777 451** **US-A- 5 777 451**
**US-A1- 2017 308 097** **US-B1- 9 632 507**

**Description**

La présente invention concerne le domaine de la gestion des pelotons de véhicules, et plus particulièrement de la gestion des pelotons de camions.

Un peloton de camions est un groupe de camions que l'on fait circuler en file, à courte distance les uns des autres, afin de réduire l'emprise du convoi de camions sur la route, et ainsi améliorer le trafic, mais également et surtout afin de limiter les pertes d'énergie, et donc la surconsommation de carburant, qui sont dues à la traînée aérodynamique individuelle de chaque camion.

Bien entendu, pour garantir la sécurité du convoi au regard des faibles distances qui séparent les uns des autres les camions appartenant au peloton, il est prévu des moyens de contrôle automatisés qui rendent chaque camion suiveur capable d'adapter de manière automatique son comportement de conduite individuel, et notamment son freinage, en fonction du comportement de conduite du camion qui le précède dans le peloton.

A ce titre, il est notamment connu de définir, pour une vitesse de roulage donnée, une distance de séparation entre les camions successifs, dite distance inter-véhicules, qui est fixée en fonction du temps de réaction des camions suiveurs, lequel temps de réaction dépend de la durée qui est nécessaire aux moyens de contrôle automatisés de chaque camion suiveur pour détecter une modification du comportement de conduite du camion de tête et/ou du camion qui précède le camion suiveur considéré, et pour traiter cette information afin d'adapter en conséquence le comportement de conduite dudit camion suiveur. Par exemple, le brevet US9632507 décrit un système de contrôle pour le peloton d'une pluralité de véhicules, chacun d'entre eux étant équipé de systèmes de contrôle de freinage de véhicule et de composants de système de communication. Le système détermine les distances de suivi nominales pour chacun des véhicules qui suivent par rapport au véhicule qui les précède immédiatement, en se basant en partie sur les capacités de freinage. Des capteurs de véhicules répartis dans le peloton sont mis en oeuvre pour surveiller les véhicules cibles positionnés par rapport au peloton, et tout ou partie des distances de suivi nominales sont ajustées de manière dynamique pour tenir compte des risques de freinage associés aux véhicules cibles. Le brevet US5777451 décrit un procédé dans lequel une cellule virtuelle est définie pour chaque véhicule, permettant une distance prédéterminée devant et derrière le véhicule, et la position frontale de la cellule virtuelle du véhicule le plus à l'avant est indiquée de l'extérieur. Une valeur obtenue en ajoutant la longueur de la cellule virtuelle à la position frontale de la cellule virtuelle est transmise au véhicule suivant en tant que position frontale de la cellule virtuelle du véhicule suivant. Une position relative dans la cellule virtuelle de chaque véhicule est détectée, et en contrôlant cette position relative à une position cible prédéfinie, la distance inter-véhicules est réduite et la génération d'ondes de dilatation entre les véhicules est empêchée.

Cependant, les inventeurs ont constaté que si un tel mode de définition de la distance inter-véhicules au regard du temps de réponse des moyens de contrôle automatisés est relativement bien adapté à des situations idéales, dans lesquelles les camions, de même que leur chargement, sont tous identiques, ledit mode de définition de la distance inter-véhicules est en revanche incapable de prendre véritablement en considération les spécificités et la multiplicité des situations réelles rencontrées par les gestionnaires de flottes de camions, qui sont susceptibles ou désireux de faire circuler en peloton des camions qui présentent en pratique inévitablement des caractéristiques et/ou des chargements différents.

Les objets assignés à l'invention visent par conséquent à remédier aux inconvénients susmentionnés et à proposer un nouveau procédé d'organisation d'un peloton de véhicules, et plus particulièrement d'un peloton de camions, qui permette d'optimiser en toutes circonstances l'agencement dudit peloton, malgré d'éventuelles disparités entre les véhicules.

Les objets assignés à l'invention sont atteints au moyen d'un procédé d'organisation d'un groupe de plusieurs véhicules selon la revendication 1 et d'un système de gestion de peloton de véhicules destiné à organiser un peloton de plusieurs véhicules distincts selon la revendication 8.

Avantageusement, le procédé selon l'invention propose donc de prendre en considération, notamment lors de la constitution du peloton ou d'un réagencement ultérieur dudit peloton, une information qui est représentative de la situation du ou des pneumatiques de chaque véhicule concerné.

Dans la mesure où les pneumatiques constituent des organes qui d'une part sont propres au véhicule considéré et qui d'autre part sont déterminants quant à l'adhérence dudit véhicule sur la route, et donc quant à la capacité de freinage dudit véhicule, la prise en considération d'un tel paramètre de pneumatique, conformément à l'invention, permet notamment d'estimer finement la capacité effective de réaction, et notamment la capacité effective de freinage, de chaque véhicule du peloton.

Plus particulièrement, l'invention permet d'évaluer et de prendre en considération de manière fiable et très précise les performances de freinage individuelles de chaque véhicule, et de comparer ces performances de freinage individuelles du véhicule considéré aux performances de freinage des autres véhicules constitutifs du peloton.

On peut donc déterminer en toute connaissance de cause l'ordre du peloton, et de préférence assigner à chaque véhicule un rang d'autant plus élevé que sa capacité de freinage est bonne, de manière à ce que le véhicule qui freine le mieux se retrouve en queue de peloton, et le véhicule qui freine le moins bien se retrouve en tête de peloton.

On peut ainsi en outre ajuster finement et au cas par cas la distance inter-véhicules, entre chaque véhicule suiveur et le véhicule qui le précède immédiatement, de telle sorte que ladite distance inter-véhicules soit minimale, et juste nécessaire et suffisante pour éviter une collision entre deux véhicules successifs, notamment en cas de freinage d'urgence.

Ainsi, l'invention permet, en toute sécurité, d'optimiser le rapprochement des véhicules, et donc d'optimiser les économies d'énergie que l'on réalise en minimisant l'effet de traînée aérodynamique.

Par ailleurs l'invention est avantageusement applicable indépendamment de la marque du véhicule (c'est-à-dire du constructeur du véhicule) ou du type du véhicule (notamment qu'il s'agisse d'un camion « porteur » d'un seul tenant, dit également « rigide », ou bien d'un semi-remorque par exemple), et quel que soit le chargement du véhicule, ce qui confère au procédé une grande polyvalence, en permettant notamment de réaliser un regroupement de véhicules, et en particulier un regroupement de camions, en peloton « multimarques ».

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, selon une vue schématique, la mise en oeuvre d'un peloton de véhicules, et plus particulièrement d'un peloton de camions, conformément à l'invention.

La figure 2 illustre, selon une vue schématique, l'acquisition, au sein d'un véhicule postulant, de paramètres, et notamment de paramètres de pneumatique, utiles à la mise en oeuvre d'un procédé d'organisation de peloton selon l'invention.

La figure 3 illustre, sous forme d'un schéma-bloc, la mise en oeuvre d'un procédé selon l'invention.

La présente invention concerne un procédé d'organisation d'un groupe de plusieurs véhicules 1, 101, 201 distincts selon un peloton 2.

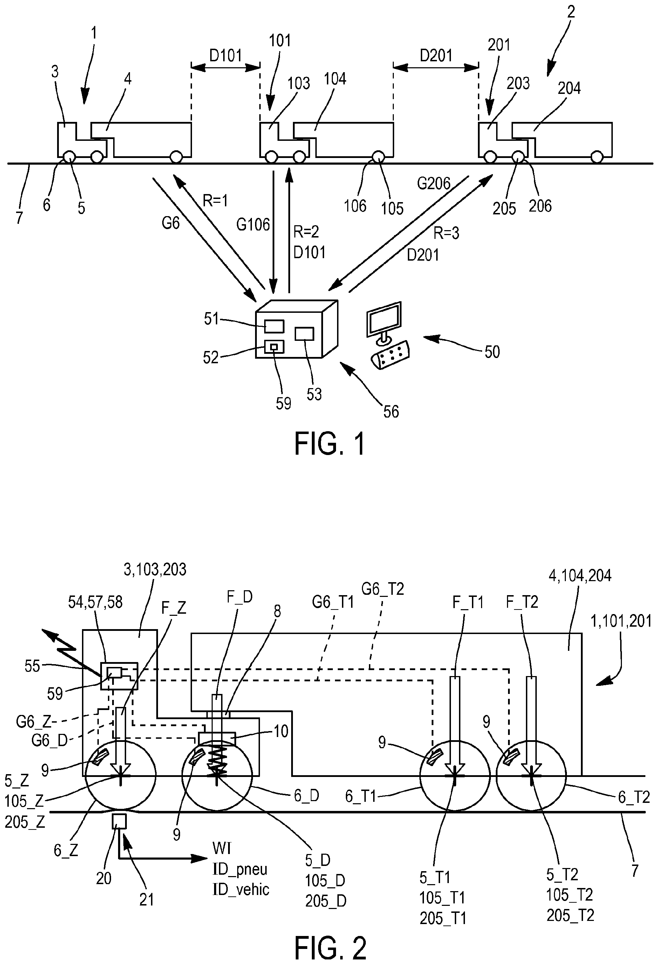

De préférence, tel que cela est notamment illustré sur les figures 1 et 2, lesdits véhicules 1, 101, 201 seront formés par des camions, et encore plus préférentiellement par des semi-remorques, comprenant chacun un tracteur 3, 103, 203 auquel est attelé une remorque 4, 104, 204.

On pourra notamment considérer comme camion tout véhicule terrestre roulant dont le poids total autorisé en charge (PTAC) est supérieur à 3,5 tonnes.

Au sein dudit peloton 2, les véhicules 1, 101, 201 sont ordonnés en une file.

Par simple convention de description, on appellera « véhicule meneur » 1 le véhicule du peloton 2 qui se trouve en tête de ladite file, et par « véhicule suiveur » 101, 201 le ou les véhicules du peloton qui viennent à la suite du véhicule meneur dans ladite file.

De préférence, les véhicules 1, 101, 201 du peloton 2 se suivent les uns derrières les autres sur une seule voie, selon une file unique, comprenant un seul véhicule de front.

Toutefois, en variante, il serait possible, sans sortir du cadre de l'invention, d'appliquer le procédé à l'organisation d'un peloton 2 qui comprendrait plusieurs véhicules de front, de sorte à former plusieurs files parallèles réparties sur autant de voies de circulation.

Au sein dudit peloton 2, chaque véhicule qui suit au moins un autre véhicule dudit peloton 2, c'est-à-dire chaque véhicule suiveur 101, 201, est capable d'adapter de manière automatique son comportement de conduite individuel en fonction du comportement de conduite d'un ou plusieurs véhicules 1, 101 du peloton qui le précèdent dans la file.

Plus particulièrement, chaque véhicule suiveur 101, 201 sera capable de détecter un ralentissement du véhicule meneur 1 et/ou d'au moins l'un des véhicules qui le précèdent dans le peloton 2, et plus particulièrement un ralentissement du véhicule qui le précède immédiatement dans le peloton 2, et de réagir en déclenchant automatiquement une action de freinage appropriée.

A cet effet, chaque véhicule 1, 101, 201 concerné sera avantageusement équipé de moyens de contrôle automatisés, et plus particulièrement de moyens automatisés de détection du comportement de conduite des autres véhicules, et de moyens automatisés d'adaptation de son propre comportement de conduite, tel que cela sera détaillé ci-dessous.

Plus globalement, il est envisageable de prévoir une conduite partiellement ou entièrement automatique des véhicules 1, 101, 201, en particulier des véhicules suiveurs 101, 201.

On pourra par exemple faire en sorte que chaque véhicule suiveur adapte automatiquement sa vitesse, ses accélérations, ses freinages, voire son contrôle de direction, en fonction du comportement du véhicule meneur et/ou en fonction du comportement du véhicule qui précède immédiatement le véhicule considéré, et, de façon préférentielle, faire en sorte que chaque véhicule suiveur puisse ainsi suivre la même trajectoire que véhicule meneur.

On pourra de préférence prévoir que le véhicule meneur 1, qui se trouve en tête du peloton 2 à l'instant considéré, communique avec le ou les véhicules suiveurs 101, 201 de manière à informer immédiatement l'ensemble des véhicules suiveurs d'un changement de son comportement de conduite, et notamment de la mise en oeuvre d'un freinage, notamment d'un freinage d'urgence, et ce de manière à réduire le temps de réaction du ou des véhicules suiveurs 101, 201.

De préférence, et le cas échéant en complément de moyens d'échange d'informations avec le véhicule meneur 1, chaque véhicule 1, 101, 201 sera pourvu individuellement de ses propres moyens de détection d'obstacle et/ou de contrôle de distance par rapport à un véhicule qui le précède, de manière à pouvoir adapter de manière autonome sa vitesse et/ou son action de freinage en fonction notamment du comportement de conduite du véhicule 1, 101 qui le précède dans le peloton 2.

Bien entendu, les véhicules 1, 101, 201 restent distincts les uns des autres au sein du peloton 2, et en particulier ne créent pas de liens mécaniques entre eux, de sorte que chaque véhicule 1, 101, 201 utilise de manière autonome, par rapport aux autres véhicules du peloton, ses propre moyens de propulsion, de direction et de freinage pour adapter son comportement individuel en fonction du comportement de tout ou partie des autres véhicules du peloton.

On notera par ailleurs que l'ordre des véhicules 1, 101, 201 au sein du peloton 2 pourra être modifié au cours du temps, notamment afin que plusieurs véhicules différents puissent se succéder au cours du temps en tant que véhicule meneur, et ce de manière à ce que le bénéfice de la réduction de consommation de carburant liée à la réduction de la traînée aérodynamique soit réparti équitablement entre les différents véhicules du peloton.

De même, le véhicule meneur pourra être remplacé, lorsqu'il atteint sa destination et quitte le peloton 2, par un autre véhicule meneur qui lui succédera.

Chaque véhicule 1, 101, 201 du peloton 2 restera dans le peloton 2 jusqu'à atteindre une destination prédéterminée, à laquelle ledit véhicule quittera le peloton 2.

Le peloton 2 pourra bien entendu être réorganisé avec les véhicules restants et/ou avec de nouveaux véhicules qui souhaitent rejoindre ledit peloton 2.

Selon l'invention, le procédé comprend une étape (a) d'identification, au cours de laquelle on identifie les véhicules 1, 101, 201 devant former le peloton 2, dits « véhicules postulants ».

En pratique, le peloton accueillera de préférence, à titre indicatif, de deux à dix véhicules, et typiquement entre trois et huit véhicules. Bien entendu, le peloton pourrait accueillir davantage de véhicules sans sortir du cadre de l'invention.

Chacun des véhicules postulants 1, 101, 201 est pourvu d'au moins un essieu 5, 105, 205 qui comprend au moins un pneumatique 6, 106, 206 assurant une liaison dudit véhicule postulant 1, 101, 201 avec le sol 7.

En pratique, le ou les pneumatiques 6, 106, 206 assurent préférentiellement, de façon connue en soi, une liaison roulante dudit véhicule postulant 1, 101, 201 avec le sol 7.

Lorsque le véhicule postulant 1, 101, 201 est un semi-remorque, on pourra distinguer de préférence, par commodité de description, trois types d'essieux, tel que cela est illustré sur la figure 2 :

- un essieu avant du tracteur 3, formant un essieu directeur 5_Z, 105_Z, 205_Z, qui est porteur de roues directrices orientables en lacet, et qui permet de contrôler l'angle de braquage du véhicule 1, 101, 201 ; par convention de notation, on pourra repérer un tel essieu directeur au moyen de l'indice « Z », qui renvoie au terme anglais « Steer » ;

- un essieu arrière du tracteur 3, formant un essieu propulseur 5_D, 105_D, 205_D, qui transmet un couple moteur au pneumatique 6, 106, 206 et donc au sol, de manière à faire avancer le véhicule 1, 101, 201 ; par convention de notation, on pourra repérer un tel essieu propulseur au moyen de l'indice « D », renvoyant au terme anglais « Drive » ; de préférence, ledit essieu propulseur 5_D, 105_D, 205_D sera situé sensiblement à l'aplomb de la sellette d'attelage 8 qui permet d'atteler la remorque 4, 104, 204 au tracteur 3, 103, 203 ;

- un essieu de remorque 5_T, 105_T, 205_T, qui équipe et soutient la remorque 4, 104, 204 ; par convention de notation, on pourra repérer un tel essieu de remorque au moyen de l'indice « T », renvoyant au terme anglais « Trailer ».

Bien entendu, il est parfaitement possible que le véhicule 1, 101, 201 possède plusieurs essieux d'un même type, par exemple plusieurs essieux propulseurs 5_D, 105_D, 205_D, et/ou plusieurs essieux de remorque 5_T, 105_T, 205_T, sans sortir du cadre de l'invention.

Ainsi, par exemple, sur la figure 2, on a représenté une remorque 4 comprenant deux essieux de remorque 5_T1, 5_T2 (respectivement une remorque 104 avec deux essieux de remorque 105_T1, 105_T2 et une remorque 204 avec deux essieux de remorque 205_T1, 205_T2).

De même, chaque essieu 5, 105, 205 peut, de façon connue en soi, comprendre plusieurs pneumatiques, à raison par exemple de deux pneumatiques 6, 106, 206 sur un même essieu, ou même quatre pneumatiques 6, 106, 206 sur un même essieu, si l'on utilise des roues jumelées.

Selon l'invention, le procédé comprend une étape (b) d'acquisition, au cours de laquelle on acquiert, pour chaque véhicule postulant 1, 101, 201, au moins un paramètre de pneumatique (G6, G106, G206) lié audit au moins un pneumatique (6, 106, 206) assurant la liaison dudit véhicule postulant avec le sol, le paramètre de pneumatique étant représentatif d'une classe d'adhérence sur sol mouillé normalisée de l'au moins pneumatique concerné qui est indiquée sur le marquage identificateur du pneumatique, et on obtient à partir du paramètre de pneumatique un indice d'adhérence intrinsèque au pneumatique qui quantifie la capacité d'adhérence au sol du pneumatique considéré lors d'un freinage, ledit l'indice d'adhérence considéré (G6, G106, G206) correspondant à un indice d'adhérence sur sol mouillé, l'indice d'adhérence intrinsèque au pneumatique (G6, G106, G206) correspondant à une valeur d'indice d'adhérence sur sol mouillé que l'on déduit de la classe d'adhérence sur sol mouillé normalisée,

On notera que, lorsqu'il sera nécessaire de distinguer entre pneumatiques d'un même véhicule, ou entre paramètres de pneumatiques issus de différents pneumatiques d'un même véhicule, on pourra notamment appliquer la même convention d'indices que précédemment : Z pour « Steer », D pour « Drive », et T pour « Trailer », au besoin complétés par un numéro incrémental.

Ainsi, par exemple, un paramètre de pneumatique tiré d'un pneumatique 6 de l'essieu directeur 5Z du premier véhicule 1 pourra être noté G6_Z, et un paramètre de pneumatique tiré d'un pneumatique 106 appartenant au second essieu de remorque 105_T2 du second véhicule 101 pourra être noté G106_T2.

Avantageusement, comme cela a été dit plus haut, le fait de collecter une information issue du pneumatique 6, 106, 206 fournit tout d'abord une indication qui est propre au véhicule postulant considéré, et qui peut varier d'un véhicule postulant à l'autre, ou bien qui peut varier au fil du temps sur un même véhicule.

Une telle information permet donc de caractériser chaque véhicule sur un critère objectif, et donc de comparer les véhicules postulants entre eux afin d'opérer une distinction entre les divers véhicules postulants, selon ce critère objectif, pertinent pour organiser le peloton 2.

En outre, une information relative à un pneumatique 6, 106, 206 permet de caractériser la tenue de route du véhicule postulant 1, 101, 201, et plus particulièrement de quantifier la capacité de freinage de l'essieu 5, 105, 205 considéré, et donc la capacité de freinage globale dudit véhicule postulant.

Il devient donc possible de comparer et d'ordonner les véhicules postulants en se basant sur un critère objectif représentatif de la capacité d'adhérence et de freinage de chaque véhicule à l'instant considéré.

On peut donc agencer le peloton 2 en connaissance de cause, de manière optimisée.

A ce titre, selon l'invention, le procédé comprend ensuite, après l'étape (b) d'acquisition, une étape (c) de traitement au cours de laquelle on détermine, à partir d'un indice d'adhérence du pneumatique G6, G106, G206, le rang R attribué au véhicule postulant 1, 101, 201 considéré dans le peloton 2 et/ou la distance inter-véhicules D101, D201 qui doit séparer, à une vitesse donnée, le véhicule 101, 201 postulant considéré du véhicule 1, 101 qui le précède immédiatement dans le peloton 2.

Le rang R = 1, 2, 3... correspond au numéro d'ordre attribué au véhicule postulant 1, 101, 201, et donc à la place que doit rejoindre ledit véhicule dans la file.

Ainsi, le véhicule meneur 1 reçoit le rang R = 1, le véhicule 101 qui le suit immédiatement le rang R = 2, etc.

De préférence, la distance inter-véhicules D101, D201 pourra varier d'une paire de véhicule à l'autre, en fonction des performances de freinage relatives du véhicule suiveur concerné par rapport au véhicule qui le précède.

On pourra ainsi adapter chaque distance inter-véhicules D101, D201 au cas par cas, sans devoir imposer une même distance inter-véhicules identique entre chaque paire de véhicules successifs du peloton 2.

En tout état de cause, puisque le but de la formation d'un peloton 2 est de faire circuler les véhicules à faible distance les uns des autres notamment pour limiter les effets de la traînée aérodynamique, ladite distance inter-véhicules D101, D201 correspondra de préférence, lorsque les véhicules 1, 101, 201 circulent à une vitesse non nulle, à un intervalle qui aura une réelle influence sur la traînée aérodynamique, et qui sera à cet effet compris de préférence entre 5 m et 25 m.

A titre d'exemple préférentiel, pour des vitesses longitudinales des véhicules 1, 101, 201 comprises entre 60 km/h et 100 km/h, et plus particulièrement entre 70 km/h et 90 km/h, ce qui correspond typiquement à des vitesses de circulation possibles sur une autoroute ou sur un réseau secondaire de bonne qualité, la distance inter-véhicules D101, D201 sera de préférence égale ou inférieure à 25 m, et par exemple préférentiellement comprise entre 5 m et 15 m.

Bien entendu, l'invention concerne également en tant que tel un système 50 de gestion de peloton 2 de véhicules, destiné à organiser un peloton 2 de plusieurs véhicules 1, 101, 201 distincts, chacun desdits véhicules étant pourvu d'au moins un essieu 5, 105, 205 qui comprend au moins un pneumatique 6, 106, 206 assurant une liaison dudit véhicule 1, 101, 201 avec le sol 7.

Ce système 50 fournira une infrastructure matérielle, de préférence une infrastructure électronique, permettant de mettre en oeuvre le procédé.

Selon l'invention, un tel système 50 comprend les unités de traitement électronique suivantes :

- une unité d'identification 51 qui, lors de l'étape (a) d'identification, identifie et recense les véhicules 1, 101, 201 devant former le peloton 2, dits « véhicules postulants »,

**EP 3 729 396 B1**

- une unité de caractérisation 52 qui, lors de l'étape (b) d'acquisition, collecte, pour chaque véhicule postulant 1, 101, 201, au moins un paramètre de pneumatique (G6, G106, G206) lié audit au moins un pneumatique (6, 16, 206) assurant la liaison dudit véhicule postulant avec le sol (7), le paramètre de pneumatique étant représentatif d'une classe normalisée d'adhérence sur sol mouillé de l'au moins pneumatique concerné qui est indiquée sur le marquage identificateur du pneumatique et qui obtient à partir du paramètre de pneumatique un indice d'adhérence intrinsèque au pneumatique qui quantifie la capacité d'adhérence au sol du pneumatique considéré lors d'un freinage, ledit l'indice d'adhérence considéré (G6, G106, G206) correspondant à un indice d'adhérence sur sol mouillé, l'indice d'adhérence intrinsèque au pneumatique (G6, G106, G206) correspondant à une valeur d'indice d'adhérence sur sol mouillé que l'on déduit de la classe d'adhérence sur sol mouillé normalisée,
- une unité d'ordonnancement 53 qui, lors de l'étape (c) de traitement, détermine, à partir de l'indice d'adhérence du pneumatique G6, G106, G206, un rang R qu'elle assigne au véhicule postulant 1, 101, 201 considéré dans le peloton 2 et/ou une consigne de distance inter-véhicules D101, D201 qui fixe la distance qui doit séparer, à une vitesse donnée, le véhicule postulant 101, 201 considéré du véhicule 1, 101 qui le précède immédiatement dans le peloton 2.

De préférence, la distance inter-véhicules D101, D201 choisie correspondra à la distance minimale que l'on peut accepter au regard des impératifs de sécurité au freinage à la vitesse considérée.

On notera par ailleurs que les unités électroniques 51, 52, 53 susmentionnées pourront par exemple être réunies au sein d'un module de formation de peloton 54 qui équipera chaque véhicule postulant 1, 101, 201.

Selon une telle variante de mise en oeuvre, chaque véhicule 1, 101, 201 pourra ainsi dialoguer, par l'intermédiaire de son module de formation de peloton 54 équipé de moyens de télécommunication 55 idoines, de manière indépendante avec n'importe quel autre véhicule 1, 101, 201 équipé d'un module 54 similaire compatible, et ainsi former ou rejoindre librement un peloton 2, qui sera composé et agencé de manière autonome par les véhicules postulants 1, 101, 201 dialoguant entre eux.

Selon une autre variante possible, lesdites unités électroniques 51, 52, 53 pourront être localisées sur un ou des serveurs 56 distants, et par exemple situées sur un serveur informatique 56 hébergé par un prestataire d'organisation de peloton, avec lequel chaque véhicule postulant 1, 101, 201, désireux de constituer un peloton 2 ou de rejoindre un peloton 2 existant, communique par l'intermédiaire de moyens de télécommunication 55 qui sont associés au réseau informatique de bord 57 dudit véhicule, tel qu'un bus CAN (« Controller Area Network »), ou bien encore par l'intermédiaire de moyens de télécommunication 55 associés à, et de préférence intégrés dans, un boîtier additionnel de gestion de peloton 58 ajouté sur ledit véhicule.

Selon une variante de réalisation possible, le ou les véhicules postulants 1, 101, 201 pourront communiquer avec le serveur distant 56 d'organisation de peloton par l'intermédiaire d'un serveur de mise en relation, qui est distinct dudit serveur distant 56 d'organisation de peloton, et qui est détenu et contrôlé par un tiers, tel qu'un gestionnaire de flotte qui possède ou gère le ou les véhicules postulants 1, 101, 201 concernés.

L'invention est bien entendu applicable quelle que soit la nature et quel que soit le nombre des interfaces et unités électroniques 51, 52, 53 utilisées pour permettre aux véhicules 1, 101, 201 de dialoguer et de former le peloton 2, et quel que soit le lieu de traitement des informations, que ces informations soient livrées brutes par le véhicule postulant 1, 101, 201 à un serveur distant 56, ou bien traitées à bord du véhicule postulant 1, 101, 201 selon tout ou partie des étapes du procédé selon l'invention.

Selon l'invention, le paramètre de pneumatique G6, G106, G206 est représentatif d'une classe normalisée d'adhérence sur sol mouillé du pneumatique concerné 6, 106, 206 qui est indiquée sur le marquage identificateur du pneumatique, un indice d'adhérence intrinsèque au pneumatique qui quantifie la capacité d'adhérence au sol du pneumatique considéré lors d'un freinage étant obtenu à partir dudit paramètre de pneumatique.

Selon d'autres exemples qui ne font pas partie de l'invention, le paramètre de pneumatique G6, G106, G206 choisi peut être toute autre caractéristique intrinsèque au pneumatique 6, 106, 206 considéré (telle que la composition chimique du pneumatique, la forme des sculptures, le type du pneumatique : été ou hiver, etc.), ou toute caractéristique concernant l'état du pneumatique (température, pression, usure, position de montage sur le véhicule, etc.), pourvu que ladite caractéristique soit pertinente pour caractériser et quantifier une influence du pneumatique 6, 106, 206 considéré sur le comportement de conduite du véhicule 1, 101, 201.

Bien entendu, on pourra choisir, pour l'application du procédé un paramètre de pneumatique parmi les paramètres de pneumatiques susmentionnés, ou bien plusieurs paramètres de pneumatique parmi lesdits paramètres de pneumatique susmentionnés.

Selon l'invention, un indice d'adhérence qui quantifie la capacité d'adhérence au sol du pneumatique 6, 106, 206 considéré lors d'un freinage est utilisé pour déterminer le rang R du véhicule postulant 1, 101, 201 dans le peloton 2 et/ou la distance inter-véhicules D101, D201.

Avantageusement, un tel indice d'adhérence est représentatif de la puissance effective de freinage du véhicule considéré, et donc de la distance d'arrêt du véhicule considéré.

Par convention, on considérera que la capacité de freinage est d'autant meilleure, et donc la distance d'arrêt

6

d'autant plus courte, que l'indice d'adhérence est élevé.

La prise en considération d'un indice d'adhérence conformément à l'invention permet avantageusement d'ordonner de préférence le peloton 2 par ordre de capacité de freinage, et d'attribuer à chaque véhicule postulant un rang R qui est d'autant plus élevé que l'indice d'adhérence est élevé, et donc que la distance d'arrêt est courte, ce qui permet de placer en tête de peloton 2 le véhicule 1 qui freine le moins bien, et en queue de peloton 2 le véhicule qui freine le mieux.

Ainsi, on est assuré que chaque véhicule suiveur 101, 201 sera capable de s'arrêter, notamment en cas de freinage d'urgence, plus rapidement que le véhicule 1, 101 qui le précède, ce qui permet de minimiser en toute sécurité la distance inter-véhicules D101, D201, sans risque de collision.

Selon l'invention, l'indice d'adhérence G6, G106, G206 considéré correspond à un indice d'adhérence sur sol mouillé, de préférence un indice d'adhérence sur sol mouillé défini par une norme.

Plus particulièrement, un tel indice d'adhérence sur sol mouillé pourra par exemple être l'indice d'adhérence sur sol mouillé défini par le règlement européen CE-228/2011 si le véhicule postulant est un véhicule de tourisme, ou par la norme ISO-15222 si le véhicule postulant est un camion ou une camionnette.

Bien entendu, on pourrait faire appel, pour l'application du procédé selon l'invention, à toute norme équivalente, applicable dans le pays concerné, qui permette de définir un indice d'adhérence sur sol mouillé.

On considère un indice d'adhérence représentatif du comportement du pneumatique 6, 106, 206, et donc du véhicule 1, 101, 201, sur sol mouillé, car un sol mouillé correspond généralement à la pire situation de freinage envisageable, dans la mesure où l'adhérence du pneumatique 6, 106, 206 est bien moindre sur sol mouillé que sur sol sec.

En organisant le peloton 2 à partir d'une hypothèse, défavorable, de freinage d'urgence sur sol mouillé, on s'assure donc de prendre toutes les marges de sécurité nécessaires.

En pratique, l'indice d'adhérence sur sol mouillé résulte d'un essai normalisé, au cours duquel on compare les performances de freinage, sur sol 7 mouillé, d'un véhicule équipé du pneumatique 6, 106, 206 considéré, par rapport aux performances de freinage de ce même véhicule équipé d'un pneu standard de référence, dit « SRTT » pour « Standard Reference Truck Tyre », auquel correspond, par convention, un indice d'adhérence sur sol mouillé valant 1,00 (c'est-à-dire, de manière équivalente, 100%).

Les conditions de ces essais normalisés sont de préférence précisées par la norme ISO-15222 pour les camions et bus, qui relèvent d'une classe de pneumatiques dite « C3 », et les camionnettes qui relèvent d'une classe de pneumatiques dite « C2 », et par le règlement européen CE-228/2011 pour les véhicules de tourisme qui relèvent d'une classe de pneumatiques dite « C1 ». Bien entendu, ici encore, on pourra se référer *mutatis mutandis* à toute norme équivalente applicable dans le pays concerné, sans sortir du cadre de l'invention.

Avantageusement, l'utilisation d'un indice d'adhérence normalisé, qui est par nature indépendant de la marque du pneumatique 6, 106, 206 ou de la marque ou de la nature du véhicule 1, 101, 201, permet d'évaluer et de comparer entre eux, de manière fiable et objective, en utilisant une référence commune, des véhicules très différents, et ce notamment quelle que soit la marque respective de chacun desdits véhicules.

En outre, cette information concernant l'indice d'adhérence sur sol mouillé est systématiquement accessible, car elle résulte de tests d'homologation que doit mener le manufacturier du pneumatique 6, 106, 206 avant de commercialiser ledit pneumatique, et fait partie d'un marquage réglementaire standardisé qui doit obligatoirement être apposé par le manufacturier sur le flanc dudit pneumatique, conformément par exemple au règlement européen CE-1222/2009.

Bien entendu, ici encore, on pourra se référer *mutatis mutandis* à toute norme équivalente applicable dans le pays concerné, sans sortir du cadre de l'invention. Toutefois, par commodité de description, on fera préférentiellement référence, dans ce qui suit aux normes et règlements applicables en Europe.

En pratique, l'indice d'adhérence sur sol mouillé mesuré lors des essais normalisés permettra d'affecter au pneumatique une classe d'adhérence, symbolisée par une lettre allant de A à F.

Un tableau de correspondance entre la valeur de l'indice d'adhérence sur sol mouillé, noté « G » (dont la valeur est de 1,00 pour le pneu standard de référence SRTT) et la classe d'adhérence, tiré du règlement européen CE-1222/2009 susmentionné, est reproduit ci-dessous :

*Tableau 1*

| Pneumatiques C3 (camions) | |
|---|---|
| Indice d'adhérence sur sol mouillé | Classe d'adhérence sur sol mouillé |
| G ≥ 1,25 | A |
| 1,10 ≤ G 1,24 | B |
| 0,95 ≤ G ≤ 1,09 | C |
| 0,80 ≤ G ≤ 0,94 | D |

(suite)

| Pneumatiques C3 (camions) | |
|---|---|
| Indice d'adhérence sur sol mouillé | Classe d'adhérence sur sol mouillé |
| $0{,}65 \leq G \leq 0{,}79$ | E |
| $G \leq 0{,}64$ | F |

Selon l'invention, l'indice d'adhérence G6, G106, G206 correspond à une valeur d'indice d'adhérence sur sol mouillé que l'on déduit d'une classe d'adhérence sur sol mouillé normalisée qui est indiquée sur le marquage identificateur du pneumatique 6, 106, 206.

Ledit marquage indicateur, et plus particulièrement la mention de la classe d'adhérence sur sol mouillé, pourra de préférence être réalisé(e) conformément au règlement européen CE-1222/2009. Bien entendu, ici encore, on pourra se référer *mutatis mutandis* à toute norme ou règlement équivalent applicable dans le pays concerné, sans sortir du cadre de l'invention.

L'unité de caractérisation 52 comporte un module d'acquisition d'indice d'adhérence 59 qui collecte un paramètre de pneumatique G6, G106, G206 qui est représentatif de la classe d'adhérence sur sol mouillé de l'au moins un pneumatique 6, 106, 206 concerné.

Avantageusement, l'acquisition d'un tel paramètre de pneumatique G6, G106, G206 est facile et sûre, puisque la classe d'adhérence sur sol mouillé fait partie des informations qui sont obligatoirement certifiées et mises à disposition de l'utilisateur du pneumatique par le manufacturier, et que cette information figure en particulier expressément sur le marquage présent sur le flanc du pneumatique.

Par simplicité de calcul et par réalisme quant à la représentativité de l'indice d'adhérence sur sol mouillé pris en considération, on pourra par exemple considérer que l'indice d'adhérence sur sol mouillé G6, G106, G206 à retenir correspond :

- à la valeur moyenne de l'indice sur la classe d'adhérence, lorsque ladite classe d'adhérence correspond à une plage d'indices d'adhérence qui est comprise entre un seuil inférieur et un seuil supérieur (comme c'est le cas pour les classes B à E) ; en référence au Tableau 1 ci-dessus, on retiendrait ainsi, pour un pneu de classe d'adhérence B, $G6(B) = (1{,}10 + 1{,}24) / 2 = 1{,}17$ ;

- au seuil qui délimite la classe d'adhérence, lorsque cette dernière est définie par référence à un indice seuil unique (cas des classes A et F) ; dans l'exemple ci-dessus, on retiendrait, pour la classe d'adhérence supérieure, c'est-à-dire la classe A : $G6(A) = 1{,}25$.

Bien entendu, on pourra utiliser tout moyen approprié pour permettre au module d'acquisition d'indice d'adhérence 59 de collecter le paramètre de pneumatique G6, G106, G206 représentatif de l'indice d'adhérence sur sol mouillé.

Ainsi, on pourrait par exemple envisager une saisie de l'information au moyen d'un lecteur optique capable de lire le marquage de flanc du pneumatique, ou bien au moyen d'une interface homme-machine adéquate permettant à un opérateur de renseigner, entre autres, la classe de chaque pneumatique.

En variante, on pourrait relever un identifiant ID_pneu du pneumatique 6, 106, 206, de type numéro de série, et croiser cette information d'identifiant ID_pneu avec une base de données qui contient l'information quant à la classe d'adhérence sur sol mouillé pour laquelle ledit pneumatique a été homologué.

De façon préférentielle, le paramètre de pneumatique G6, G106, G206, et plus particulièrement la classe d'adhérence sur sol mouillé, est obtenu(e) par télétransmission à partir d'une information transmise par un transpondeur 9 implanté dans le pneumatique 6, 106, 206 considéré.

Ceci facilite une acquisition rapide, automatique et fiable du paramètre de pneumatique G6, G106, G206.

Le transpondeur 9 pourra avantageusement former un transpondeur d'identification et comprendre à ce titre une puce d'identification par radiofréquence (« RFID »), pouvant être lue à distance par un détecteur approprié.

Le transpondeur 9 pourra contenir un identifiant du pneu ID_pneu, tel qu'un numéro de série, à partir duquel on pourra retrouver ou confirmer la valeur du paramètre de pneumatique G6, G106, G206 recherché, et plus particulièrement à partir duquel on pourra retrouver ou confirmer la classe d'adhérence du pneumatique, en croisant cet identifiant ID_pneu avec une base de données.

Selon une variante, le transpondeur 9 pourra lui-même contenir directement, dans une mémoire non volatile, et transmettre sur requête, la valeur du paramètre de pneumatique G6, G106, G206 recherché, et plus particulièrement la classe d'adhérence sur sol mouillé et/ou l'indice d'adhérence sur sol mouillé pour lequel le pneumatique 6, 106, 206 a été homologué.

Selon une possibilité de mise en oeuvre, le transpondeur 9 pourra faire partie de, ou être associé à, un dispositif de surveillance du pneumatique, dit « TMS » (« Tyre Monitoring System ») ou « TPMS » (« Tyre Pressure Monitoring System »), qui est capable de mesurer et de surveiller un ou plusieurs paramètres représentatifs de l'état du pneumatique, tel que la pression de gonflage qui règne à l'intérieur de l'enveloppe délimitée par le pneumatique, la température dudit pneumatique, un état de contrainte dans une zone particulière dudit pneumatique, etc.

Ledit dispositif de surveillance de pneumatique TMS, TPMS pourra être formé par exemple par un système micro-électro-mécanique.

Le transpondeur 9, et plus particulièrement sa puce RFID et/ou le dispositif de surveillance de pneumatique TMS, TPMS associé seront avantageusement intégrés à la structure du pneumatique 6, 106, 206 lors de la fabrication de celui-ci.

A cet effet, le transpondeur 9, sa puce RFID, et/ou le dispositif de surveillance de pneumatique TMS, TPMS pourront notamment se présenter sous la forme d'un insert dit « cured-in » noyé dans la gomme du pneumatique, ou bien sous la forme d'un patch apposé à l'intérieur de l'enveloppe du pneumatique avant cuisson et solidarisé à ladite enveloppe lors de l'étape de cuisson/vulcanisation du pneumatique, ou bien encore sous forme d'une étiquette rapportée par collage à l'intérieur de l'enveloppe du pneumatique, après vulcanisation de ladite enveloppe.

De préférence, le véhicule postulant 1 considéré comprend une pluralité d'essieux 5 _Z, 5_D, 5_T1, 5_T2 qui sont pourvus chacun d'au moins un pneumatique 6_Z, 6_D, 6_T1, 6_T2 assurant la liaison dudit véhicule postulant 1 avec le sol 7.

On peut alors de préférence collecter, lors de l'étape (b) d'acquisition, un indice d'adhérence G6_Z, G6_D, G6_T1, G6_T2 de l'au moins un pneumatique 6_Z, 6_D, 6_T1, 6_T2 de chaque essieu 5_Z, 5_D, 5_T1, 5_T2.

De façon particulièrement préférentielle, l'indice d'adhérence G6_Z, G6_D, G6_T1, G6_T2 collecté est un indice d'adhérence sur sol mouillé, le cas échéant obtenu à partir d'une information de classe d'adhérence sur sol mouillé, comme indiqué plus haut.

On notera que, afin de ne surcharger ni la description, ni la figure 2, on fera ici de préférence référence à un seul véhicule postulant 1 et aux essieux et pneumatiques de celui-ci, étant entendu que l'invention peut s'appliquer *mutatis mutandis* à tout véhicule postulant 1, 101, 201.

De préférence, on évalue par ailleurs la charge F_Z, F_D, F_T1, F_T2 qui est exercée par le véhicule 1 sur chacun desdits essieux 5_Z, 5_D, 5_T1, 5_T2.

Ladite charge F_Z, F_D, F_T1, F_T2 propre à chacun des essieux 5 _Z, 5_D, 5_T1, 5_T2 du véhicule 1 considéré correspond de préférence à une composante verticale de charge, homogène à un poids.

Typiquement, la charge F_Z, F_D, F_T1, F_T2 par essieu correspondra à la répartition, sur les essieux du véhicule 1, du poids dudit véhicule 1 à vide augmenté du poids de la cargaison et/ou des passagers transportés par ledit véhicule 1.

On pourra, par simplicité, considérer une charge statique.

En variante, on pourra évaluer une charge dynamique qui tient compte des effets inertiels liés à la décélération lors d'un freinage.

De préférence, la charge sera évaluée lorsque le véhicule 1 se trouve sur un sol 7 horizontal.

La charge F_Z, F_D, F_T1, F_T2 exercée sur chaque essieu 5_Z, 5_D, 5_T1, 5_T2, respectivement la charge F_Z, F_D, F_T1, F_T2 exercée sur chaque pneumatique 6_Z, 6_D, 6_T1, 6_T2, peut par exemple être évaluée à partir d'une pesée.

Dans l'absolu, on pourrait effectuer une pesée par essieu, ou, notamment dans le cas d'une remorque, une pesée par groupe d'essieux de remorque 5_T1, 5_T2.

Cependant, par commodité, il pourra être plus simple et plus rapide de peser l'ensemble du véhicule postulant 1, 101, 201, par exemple sur un pont à bascule, afin de déterminer la charge totale dudit véhicule, puis de considérer, au moins en première approximation, une loi de répartition de charge qui permet d'estimer la charge F_Z, F_D, F_T1, F_T2 par essieu ou par pneumatique.

A titre non limitatif, un exemple de loi de répartition de charge peut être donné pour un véhicule de type semi-remorque européen, présentant les caractéristiques suivantes :

Dimensions :

- Longueur hors-tout de la remorque : 13,6 m
- Distance horizontale du front (avant) de la remorque 4 jusqu'à l'essieu T1 (typiquement l'essieu médian, dans le cas d'un groupe de trois essieux) : 9,4 m
- Distance horizontale du front de remorque 4 jusqu'à la sellette d'attelage 8 : 1,6 m
- Distance horizontale de la sellette d'attelage 8 à l'essieu propulseur 5_D : 0,6 m
- Empattement entre l'essieu directeur 5_Z et l'essieu propulseur 5_D : 3,7 m.

Charge à vide (données fournies, en tonnes, par la carte grise) :

- Sur l'essieu directeur F_5Z : F_Z_vide = 5,6 t
- Sur l'essieu propulseur 5_D : F_D_vide = 3,4 t
- Sur l'essieu (le groupe d'essieux) de remorque 5_T1 : F_T1_vide = 6 t.

Si l'on mesure, par pesée, une charge totale F_tot, le poids de la cargaison F_fret vaut :

$$F\_fret = F\_tot - (F\_Z\_vide + F\_D\_vide + F\_T1\_vide).$$

Une loi applicable de répartition de charge peut alors être, en considérant que la cargaison (et plus particulièrement le centre de gravité de la cargaison) est centrée dans la remorque 4 :

$$F\_Z = F\_Z\_vide + 0,05*F\_fret$$

$$F\_D = F\_D\_vide + 0,28*F\_fret$$

$$F\_T1 = F\_T1\_vide + 0,67*F\_fret$$

En tout état de cause, la pesée pourra notamment être effectuée au point de départ du véhicule 1, après chargement du véhicule, ou bien encore lors du passage du véhicule par un point de contrôle.

Selon une autre possibilité, la charge F_Z, F_D, F_T1, F_T2 exercée sur chaque essieu 5_Z, 5_D, 5_T1, 5_T2, respectivement la charge exercée sur chaque pneumatique 6_Z, 6_D, 6_T1, 6_T2, peut par exemple être évaluée à partir d'une information de charge qui est mise à disposition sur un réseau informatique 57 du véhicule 1 par un système embarqué sur le véhicule, tel que par exemple un système d'asservissement de suspension 10, qui est destiné à ajuster l'assiette (c'est-à-dire la position en tangage et/ou en roulis par rapport au plan horizontal) de tout ou partie du véhicule 1 en fonction de la charge de ce dernier.

En effet, les camions, et en particulier les tracteurs 3 de semi-remorques, sont généralement pourvus, au niveau de leur(s) essieu(x) arrière 5_D, d'un système d'asservissement de suspension 10, par exemple un système pneumatique ou hydropneumatique, qui permet d'adapter la hauteur et/ou la raideur de la suspension dudit essieu arrière 5_D à la charge qu'exerce la remorque 4 sur le tracteur 3, au niveau de la sellette d'attelage 8.

Ce système d'asservissement de suspension 10 mesure la charge exercée par la remorque 4 et le tracteur 3 sur la suspension, et met cette information à disposition sur le réseau informatique de bord 57 (bus CAN).

A partir de cette information, il est possible d'évaluer, plus globalement, au moyen de modèles mathématique appropriés, la charge exercée sur chaque essieu 5 _Z, 5_D, 5_T1, 5_T2 du véhicule 1, et le cas échéant la charge exercée sur chaque pneumatique 6_Z, 6_D, 6_T1, 6_T2 équipant l'un desdits essieux.

Selon encore une autre possibilité, on pourrait envisager d'obtenir une information de charge F_Z, F_D, F_T1, F_T2 à partir d'un dispositif de surveillance intégré au pneumatique 6_Z, 6_D, 6_T1,6_T2, de type « TMS » (« Tyre Monitoring System ») ou « TPMS » (« Tyre Pressure Monitoring System »), notamment tel que décrit plus haut.

La charge par essieu F_Z, F_D, F_T1, F_T2 étant connue, quel que soit par ailleurs le moyen que l'on ait utilisé pour obtenir cette information de charge, on pourra alors avantageusement calculer, selon une caractéristique préférentielle qui peut constituer une invention à part entière, un indice global pondéré d'adhérence G_vehic, qui correspond à la moyenne pondérée, sur l'ensemble des essieux 5_Z, 5_D, 5_T1, 5_T2 du véhicule postulant 1 considéré, des indices d'adhérence G6_Z, G6_D, G6_T1, G6_T2, de préférence des indices d'adhérence sur sol mouillé G6_Z, G6_D, G6_T1, G6_T2, qui sont propres à chacun des essieux 5_Z, 5_D, 5_T1, 5_T2, pondérés par la charge F_Z, F_D, F_T1, F_T2 qui est appliquée à l'essieu considéré.

Ledit indice global pondéré d'adhérence peut se traduire formellement par la formule 1 suivante :

$$G\_vehic = \frac{1}{\sum_{essieux} F\_essieu} \sum_{essieux} F\_essieu * G6\_essieu \qquad \textit{(formule 1)}$$

avec :

F_essieu la charge F_Z, F_D, F_T1, F_T2 sur l'essieu 5_Z, 5_D, 5_T1, 5_T2 considéré ;
G6_essieu l'indice d'adhérence, de préférence l'indice d'adhérence sur sol mouillé, du ou des pneumatiques 6_Z, 6_D, 6_T1, 6_T2 de l'essieu considéré.

Appliquée à l'exemple du semi-remorque de la figure 2, ladite formule 1 donnera :

$$G\_vehic(1) = \frac{1}{F_Z + F_D + F_{T1} + F_{T2}} (F_Z * G6_Z + F_D * G6_D + F_{T1} * G6_{T1} + F_{T2} * G6_{T2})$$

Avantageusement, le fait de pondérer l'indice d'adhérence G6_Z, G6_D, G6_T1, G6_T2 représentatif de chaque essieu 5_Z, 5_D, 5_T1, 5_T2 du véhicule 1 par la charge F_Z, F_D, F_T1, F_T2 qui s'applique sur l'essieu considéré permet d'estimer pour chaque essieu 5_Z, 5_D, 5_T1, 5_T2 une valeur qui est représentative de la composante tangentielle d'adhérence dudit essieu sur le sol 7, et donc, plus globalement, de quantifier précisément et de prendre en considération la contribution propre de chaque essieu 5_Z, 5_D, 5_T1, 5_T2 à la capacité de freinage globale du véhicule 1 considéré.

Par « composante tangentielle d'adhérence », on désigne ici la composante d'effort d'adhérence du pneumatique sur le sol 7 qui est tangentielle au pneumatique et au sol 7, et orientée selon la direction longitudinale avant-arrière du véhicule, et qui permet donc de quantifier la capacité de freinage offerte par le pneumatique considéré, et plus globalement par l'essieu considéré.

Avantageusement, l'indice global pondéré d'adhérence du véhicule G_vehic fournit un score de performance de freinage (en particulier un score de performance de freinage sur sol mouillé) qui est parfaitement représentatif de la capacité de freinage dudit véhicule 1, y compris lorsque la monte des pneumatiques 6_Z, 6_D, 6_T1, 6_T2 n'est pas homogène d'un essieu 5_Z, 5_D, 5_T1, 5_T2 à l'autre essieu au sein d'un même véhicule, puisque ledit indice global pondéré d'adhérence G vehic permet de prendre en considération, et de différencier entre elles, des configurations du véhicule 1 dans lesquelles des pneumatiques 6_Z, 6_D, 6_T1, 6_T2 de classes d'adhérence différentes sont montés sur des essieux différents 5_Z, 5_D, 5_T1, 5_T2, en évaluant l'influence de chacune de ces classes d'adhérence distinctes.

Généralement, un même essieu 5_Z, 5_D, 5_T1, 5_T2 sera, par exigence réglementaire, équipé de pneumatiques 6_Z, 6_D, 6_T1, 6_T2 possédant une même classe d'adhérence, et en particulier une même classe d'adhérence sur sol mouillé.

Il sera donc pertinent, et le cas échéant plus simple pour réaliser les évaluations de charge F_Z, F_D, F_T1, F_T2 et le calcul de l'indice global pondéré d'adhérence G_vehic, de raisonner par essieu, en considérant que l'indice d'adhérence G6_Z, G6_D, G6_T1, G6_T2 de l'essieu considéré est égal à l'indice d'adhérence qui correspond à la classe d'adhérence commune aux pneumatiques qui équipent ledit essieu.

Le cas échéant, si des pneumatiques 6_Z, 6_D, 6_T1, 6_T2 de classes d'adhérence différentes sont montés sur un même essieu 5 _Z, 5_D, 5_T1, 5_T2, on pourra, par sécurité, considérer par exemple que la classe d'adhérence, et donc l'indice d'adhérence, dudit essieu sera l'indice d'adhérence qui correspond à la classe d'adhérence la plus basse (c'est-à-dire au pneumatique le moins performant en freinage) parmi les différentes classes d'adhérence des pneumatiques qui équipent ledit essieu.

En variante, si des pneumatiques 6_Z, 6_D, 6_T1, 6_T2 de classes d'adhérence différentes sont montés sur un même essieu 5_Z, 5_D, 5_T1, 5_T2, on pourra considérer que la classe d'adhérence de l'essieu considéré correspond à une classe d'adhérence moyenne, égale à la moyenne arithmétique, sur l'essieu considéré, des classes d'adhérence propres à chaque pneu dudit essieu, et donc, respectivement, que l'indice d'adhérence global applicable à l'essieu considéré correspond à un indice d'adhérence moyen, égal à la moyenne arithmétique des indices d'adhérence (différents) de chacun des pneu de l'essieu.

On notera par ailleurs que, quel que soit le nombre d'essieux 5_Z, 5_D, 5_T1, 5_T2, et que chaque essieu comprenne un ou plusieurs pneumatiques 6_Z, 6_D, 6_T1, 6_T2 en liaison avec le sol, on pourra, en variante, appliquer *mutatis mutandis* le calcul d'indice global pondéré d'adhérence G_vehic décrit ci-dessus en réalisant la moyenne pondérée sur l'ensemble des pneumatiques 6_Z, 6_D, 6_T1, 6_T2 considérés individuellement, plutôt que sur les essieux 5_Z, 5_D, 5_T1, 5_T2.

Ainsi, respectivement, on pourra :

- collecter, lors de l'étape (b) d'acquisition, un indice d'adhérence G6_Z, G6_D, G6_T1, G6_T2 de chacun des pneumatiques 6_Z, 6_D, 6_T1, 6_T2 du véhicule postulant 1, 101, 201 qui assurent une liaison avec le sol 7,
- évaluer la charge F_Z, F_D, F_T1, F_T2 qui est exercée par le véhicule considéré 1, 101, 201 sur chacun desdits pneumatiques 6_Z, 6_D, 6_T1, 6_T2,
- et calculer un indice global pondéré d'adhérence G_vehic, qui correspond à la moyenne pondérée, sur l'ensemble des pneumatiques 6_Z, 6_D, 6_T1, 6_T2 du véhicule postulant considéré, des indices d'adhérence G6_Z, G6_D, G6_T1, G6_T2, de préférence des indices d'adhérence sur sol mouillé, qui sont propres à chaque pneumatique 6_Z, 6_D, 6_T1, 6_T2, pondérés par la charge F_Z, F_D, F_T1, F_T2 qui est appliquée au pneumatique considéré.

Par analogie avec la formule 1 précédente, on peut alors définir une formule 2 :

$$G\_vehic = \frac{1}{\sum_{pneus} F\_pneu} \sum_{pneus} F\_pneu * G6\_pneu \qquad \textit{(formule 2)}$$

Avec :

F_pneu la charge sur le pneumatique 6_Z, 6_D, 6_T1, 6_T2 considéré ;
G6_pneu l'indice d'adhérence, de préférence l'indice d'adhérence sur sol mouillé, du pneumatique considéré.

Ici encore, la pondération de l'indice d'adhérence G6_Z, G6_D, G6_T1, G6_T2 propre à chaque pneumatique par la charge exercée sur le pneumatique considéré permet de prendre en considération précisément la contribution propre de chaque pneumatique du véhicule postulant 1, 101, 201 à la capacité globale de freinage dudit véhicule postulant.

On notera que lorsqu'un essieu, et plus globalement chacun des essieux, regroupe plusieurs pneumatiques de même classe d'adhérence, ce qui est en principe le cas en pratique, il est équivalent de calculer l'indice global pondéré d'adhérence G_vehic du véhicule considéré en considérant individuellement les pneumatiques, ou bien en considérant, de manière plus globale, les essieux.

Par ailleurs, que l'on utilise la formule 1 (approche par essieu) ou la formule 2 (approche par pneumatique), on répète de préférence le calcul de l'indice global pondéré d'adhérence G_vehic séparément pour chaque véhicule postulant 1, 101, 201, afin de pouvoir comparer entre elles les performances d'adhérence, et donc les performances de freinage, en particulier de freinage sur sol mouillé, des véhicules postulants.

On peut ainsi classer les véhicules postulant 1, 101, 201 selon leur indice d'adhérence, plus particulièrement selon leur indice global pondéré d'adhérence G vehic, et encore plus préférentiellement selon leur indice global pondéré d'adhérence sur sol mouillé G_vehic, et, le cas échéant, affecter auxdits véhicules postulants un rang R correspondant dans le peloton.

Conventionnellement, le véhicule meneur recevra le rang 1, et les véhicules suiveurs des rangs successifs allant de 2 jusqu'au nombre de véhicules total constituant le peloton 2.

De préférence, on peut ainsi ordonner les véhicules 1, 101, 201 dans le peloton 2 par ordre croissant de leur indice d'adhérence G6, G106, G206, respectivement par ordre croissant de leur indice global pondéré d'adhérence G_vehic(1), G vehic(101), G_vehic(201), et plus préférentiellement par ordre croissant de leur indice global pondéré d'adhérence G_vehic(1), G_vehic(101), G_vehic(201) sur sol mouillé.

Ainsi, le véhicule 201 présentant les meilleures performances de freinage, en particulier les meilleures performances de freinage sur sol mouillé, c'est-à-dire le véhicule 201 présentant l'indice global pondéré d'adhérence G_vehic(201) le plus élevé, se retrouvera en queue de peloton 2, tandis que le véhicule 1 présentant les moins bonnes performances de freinage, en particulier sur sol mouillé, c'est-à-dire l'indice global pondéré d'adhérence G_vehic(1) le plus bas, se retrouvera en tête de peloton 2.

Par ailleurs, et de préférence en complément d'une détermination du rang R de chaque véhicule 1, 101, 201 dans le peloton 2, le procédé peut être utilisé pour déterminer la distance inter-véhicules D101, D201 minimale devant séparer un couple de véhicules 1-101, respectivement 101-201, qui se suivent immédiatement l'un l'autre dans le peloton 2.

A cet effet, de préférence, on peut évaluer, pour chaque véhicule postulant 1, 101, 201, une distance d'arrêt caractéristique, en fonction d'une vitesse de circulation visée et de l'indice d'adhérence G6, G106, G206 dudit véhicule, et plus particulièrement en l'espèce en fonction d'une vitesse de circulation visée et de l'indice global pondéré d'adhérence G_véhic (ici préférentiellement sur sol mouillé), et comparer deux à deux les distances d'arrêt caractéristiques des véhicules postulants qui doivent se succéder dans le peloton afin de déterminer, pour chaque véhicule postulant, la distance inter-véhicules D101, D201 minimale qui doit séparer, à la vitesse considérée, ledit véhicule postulant considéré 101, 201 du véhicule 1, 101 qui le précède immédiatement dans le peloton 2.

On pourra en particulier utiliser une loi, une cartographie ou une table de correspondance, qui associe à différentes configurations de monte de pneumatiques et/ou, de manière équivalente, qui associe à différentes classes d'adhérence, ou qui associe à différents indices d'adhérence ou à différents indices globaux pondérés d'adhérence caractéristiques du véhicule, une distance d'arrêt qui peut avoir été soit calculée par simulation, soit établie empiriquement, pour une vitesse de circulation donnée.

Ladite loi, cartographie ou table de correspondance peut également prendre en considération différentes configurations de charge du véhicule considéré, par exemple une situation de véhicule à vide et une situation de véhicule chargé à la charge maximale autorisée.

Un exemple d'extrait de table de correspondance, établi ici pour un semi-remorque à trois essieux et pour une vitesse de circulation de 60 km/h, est donné dans le Tableau 2 ci-dessous :

*Tableau 2*

| Configuration du véhicule Classe d'adhérence sur sol mouillé | | | Distance d'arrêt [m] sur sol mouillé selon la charge statique | |
|---|---|---|---|---|
| Essieu Z | Essieu D | Essieu remorque T | Vide | Pleine charge |
| A | B | A | 32,9 | 32,6 |
| A | B | C | 38,2 | 36,5 |
| A | D | C | 41,9 | 39,6 |
| C | B | A | 34,4 | 36,1 |
| C | B | C | 39,7 | 40,0 |

De préférence, la distance inter-véhicules D101 entre un premier véhicule 101 et un second véhicule 1 qui précède le premier véhicule 101 pourra être choisie égale, ou sensiblement égale, à la différence entre la distance d'arrêt du premier véhicule et la distance d'arrêt du second véhicule, à la vitesse de circulation considérée.

En référence à l'exemple du tableau 2 ci-dessus, si l'on considère d'une part un premier véhicule 101 équipé en pneumatiques de classe d'adhérence A sur l'essieu avant du tracteur 105_Z, de classe d'adhérence B sur l'essieu arrière du tracteur 105_D, et de classe d'adhérence A sur l'essieu de remorque 105T (première ligne du Tableau 2 ci-dessus), et circulant à vide, et d'autre part un second véhicule 1 équipé en pneumatiques de classe d'adhérence C sur l'essieu avant du tracteur 5_Z, de classe d'adhérence B sur l'essieu arrière du tracteur 5_D, et de classe d'adhérence C sur l'essieu de remorque 5T (dernière ligne du Tableau 2 ci-dessus), et circulant à pleine charge, on constate que la distance d'arrêt du premier véhicule 101 sur sol mouillé, à la vitesse de 60 km/h, est de 32,9 m, tandis que la distance d'arrêt du second véhicule 1 est de 40 m.

La distance inter-véhicules 101 entre le second véhicule 1 et le premier véhicule 101 qui le suit sera donc de préférence au minimum, voire exactement de :

$$D101 = 40 \text{ m} - 32{,}9 \text{ m} = 7{,}1 \text{ m.}$$

Le cas échéant, la distance inter-véhicules D101 pourra être comprise entre 95 % et 120 % de la différence entre la distance d'arrêt du premier véhicule 101 et la distance d'arrêt du second véhicule 1. Le choix d'une valeur supérieure à 100 % pourra être fait notamment si l'on souhaite ajouter une marge de sécurité supplémentaire. Toutefois, même dans ce cas, on conservera de préférence une valeur modérée, par exemple égale ou inférieure à 120 %, de sorte à conserver une distance inter-véhicules réduite.

Bien entendu, la distance inter-véhicules D101, D201 pourra être ajustée dynamiquement, de sorte à être rafraîchie, le cas échéant en temps réel, lorsque la vitesse de circulation du peloton 2 change, ou bien lorsque l'ordre du peloton 2 change, ou lorsque le peloton 2 est modifié du fait qu'un ou plusieurs véhicules quittent le peloton ou rejoignent ledit peloton.

Comme indiqué plus haut, la vitesse de circulation visée sera typiquement comprise entre 60 km/h et 100 km/h, et plus particulièrement entre 70 km/h et 90 km/h.

La vitesse de l'un ou l'autre véhicule 1, 101, 201 du peloton, et de préférence de chacun des véhicules suiveurs, 101, 201, voire de l'ensemble des véhicules du peloton 2, pourra être asservie automatiquement par un régulateur de vitesse approprié, équipant chaque véhicule, et qui appliquera comme consigne, en circulation normale, c'est-à-dire en l'absence d'action de freinage, ladite vitesse de circulation visée.

De façon particulièrement préférentielle, le procédé sera utilisé à la fois pour déterminer le rang R des véhicules postulants 1, 101, 201, et donc l'ordre du peloton 2, et pour déterminer ensuite, cet ordre étant connu, la distance inter-véhicules D101, D201 entre chaque paire de véhicules (un véhicule prédécesseur/un véhicule suiveur) du peloton 2.

Selon une telle variante, on pourra, lors de l'étape (c) de traitement, affecter à chaque véhicule postulant 1, 101, 201 un rang R dans le peloton 2 en fonction de l'indice d'adhérence, respectivement en fonction de l'indice global pondéré d'adhérence G_véhic (de préférence sur sol mouillé) du véhicule considéré, puis déterminer, comme décrit dans ce qui précède, la distance inter-véhicules D101, D201 applicable à chaque paire de véhicule, compte-tenu du rang fixé.

Par ailleurs, on peut avantageusement prendre en considération, pour organiser le peloton 2, le degré d'usure WI (« Wear Intensity ») de l'au moins un pneumatique 6, 106, 206 considéré.

Typiquement, le degré d'usure WI d'un pneumatique 6, 106, 206 est déterminé par la profondeur (hauteur radiale) résiduelle des sculptures H sculptures de la bande de roulement du pneumatique 6, 106, 206, comparée à la profondeur H_neuf desdites sculptures lorsque le pneumatique est neuf.

Le degré d'usure WI pourra être mesuré par tout moyen approprié, soit manuellement, soit automatiquement lors du passage du véhicule 1, 101, 201 sur un tronçon de chaussée pourvu d'un capteur d'épaisseur 20 approprié, tel que par exemple un capteur électromagnétique ou inductif, permettant d'estimer l'épaisseur des sculptures par télémétrie.

Un tel capteur d'épaisseur 20 pourra être intégré à un boîtier télématique 21, externe au véhicule 1, 101, 201.

Ledit boîtier télématique 21 sera de préférence intégré au sol 7 ou bien à une infrastructure routière, telle qu'un portique.

A titre d'exemple, ledit boîtier télématique 21 pourra comprendre un ou plusieurs capteurs, dont par exemple le capteur d'épaisseur 20, qui sont noyés dans un tronçon de chaussée, par exemple dans un ralentisseur, et qui sont aptes à activer un transpondeur 9, ou à réagir à la présence d'un transpondeur 9 placé dans le pneumatique, afin de recueillir diverses informations et/ou mesures concernant le pneumatique, telles que par exemple l'identifiant du pneumatique ID_pneu, la profondeur effective H sculptures des sculptures dudit pneumatique 6, et/ou un identifiant ID_vehic du véhicule 1, 101, 201 sur lequel est monté le pneumatique 6.

Le degré d'usure WI pourra notamment être évalué en comparant la profondeur effective résiduelle des sculptures du pneumatique H sculptures, mesurée par le capteur d'épaisseur 20, avec la profondeur des sculptures du pneumatique neuf H_neuf, qui pourra par exemple être obtenue à partir d'une base de données fournie par le manufacturier, en connaissant l'identifiant ID_pneu dudit pneumatique.

Avantageusement, quel que soit par ailleurs le moyen utilisé pour évaluer le degré d'usure WI, on pourra ajuster en fonction du degré d'usure WI l'indice d'adhérence G6, G106, G206 du pneumatique que l'on considère, en particulier que l'on considère pour déterminer le rang R du véhicule 1, 101, 201 dans le peloton 2 et/ou la distance inter-véhicules D101, D201.

En effet, l'usure du pneumatique influe sur les capacités d'adhérence, et donc sur les performances de freinage, dudit pneumatique.

Prendre en considération le degré d'usure WI permet donc de rendre l'évaluation des performances de freinage du véhicule 1, 101, 201, et donc la détermination du rang R et/ou de la distance inter-véhicules D101, D201, encore plus précise et fiable.

Plus particulièrement, et notamment en lien avec l'une ou l'autre des étapes décrites dans ce qui précède, notamment pour le calcul de l'indice global pondéré d'adhérence G_vehic, on peut prendre en considération l'indice d'adhérence sur sol mouillé G6, G106, G206 du pneumatique 6, 106, 206 considéré, et corriger cet indice d'adhérence sur sol mouillé en lui appliquant un coefficient de correction qui décroît, selon une loi prédéterminée, lorsque le degré d'usure WI du pneumatique augmente.

En effet, les inventeurs ont constaté que les performances de freinage sur sol mouillé diminuent lorsque l'usure du pneumatique augmente.

Par convention, on pourra considérer que le degré d'usure WI vaut 0 (0%) lorsque le pneumatique 6, 106, 206 est neuf, et vaut 1 (100%) lorsque le pneumatique est totalement usé, c'est-à-dire lorsque la hauteur résiduelle de ses sculptures H sculptures atteint la hauteur H_témoin d'un témoin d'usure qui est prévu en fond de sculpture.

A ce titre, on pourra par exemple poser :

$$WI = \frac{(H_{sculptures} - H_{neuf})}{(H_{témoin} - H_{neuf})}$$

avec :

H_sculptures la profondeur des sculptures du pneumatique 6 à l'instant considéré ;
H_neuf la profondeur des sculptures du pneumatique 6 neuf ;
H_témoin la hauteur du témoin d'usure par rapport au fond de sculpture.

La profondeur des sculptures H sculptures sera de préférence vérifiée périodiquement, à intervalles de temps prédéfinis, par exemple une fois par mois, et le degré d'usure WI rafraîchi en conséquence.

Les inventeurs ont par ailleurs constaté que, généralement, on pouvait observer un allongement de l'ordre de 15% de la distance d'arrêt sur sol mouillé lorsque le degré d'usure atteint 100% (c'est-à-dire lorsque les sculptures atteignent le témoin d'usure).

Par conséquent, on pourra proposer un modèle d'ajustement de l'indice d'adhérence sur sol mouillé selon une fonction décroissante du degré d'usure WI, par exemple selon une fonction affine, telle que :

$$G6 = G6_{neuf} * (1 - WI * c1)$$

avec :

G6_neuf l'indice d'adhérence sur sol mouillé du pneumatique 6 à l'état neuf ;
WI le degré d'usure compris entre 0 (pneu neuf) et 1 (pneu totalement usé) ;
c1 le coefficient de dégradation d'adhérence, par exemple c1 = 0,15 (soient 15%, ce qui correspond à la dégradation d'adhérence empiriquement constatée entre un pneumatique neuf et un pneumatique totalement usé).

Le coefficient de correction appliqué à l'indice d'adhérence G6 correspond alors à la valeur (1-WI*c1).
Le coefficient de dégradation c1 pourra être déterminé empiriquement.
De préférence, ledit coefficient de dégradation c1 sera compris entre 0,10 et 0,20, et par exemple égal à 0,15.
En pratique, le degré d'usure des pneumatiques d'un même essieu est en général assez proche d'un pneumatique à l'autre, si bien que l'on peut appliquer ce degré d'usure à l'indice d'adhérence de l'essieu considéré.
Ceci étant, dans l'hypothèse où un même essieu 5_Z, 5_D, 5_T1, 5_T2 comprendrait plusieurs pneumatiques qui présenteraient des degrés d'usure WI différents, on pourrait soit adopter une approche par pneumatique selon la formule 2 ci-dessus, soit par exemple considérer, par sécurité, que le degré d'usure le plus défavorable s'applique à l'ensemble de l'essieu considéré lors du calcul de l'indice global pondéré d'adhérence G_vehic selon la formule 1.
En définitive, on pourra adapter comme suit la formule 1 (approche par essieu) pour tenir compte de l'usure :

$$G\_vehic = \frac{1}{\sum_{essieux} F_{essieu}} \sum_{essieux} F_{essieu} * G6_{neuf\_essieu} * (1 - WI * c1)$$

où :

F_essieu est la charge exercée sur l'essieu ;
G6_neuf_essieu représente l'indice d'adhérence sur sol mouillé, à l'état neuf, du pneumatique ou de l'ensemble des pneumatiques montés sur l'essieu considéré ;
WI est le degré d'usure compris entre 0 (pneu neuf) et 1 (pneu totalement usé) ;
c1 est le coefficient de dégradation d'adhérence, tel que décrit plus haut.

De manière similaire, on pourrait adapter la formule 2 (approche par pneumatique individuel) comme suit :

$$G_{vehic} = \frac{1}{\sum_{pneus} F_{pneu}} \sum_{pneus} F_{pneu} * G6_{neuf} * (1 - WI * c1)$$

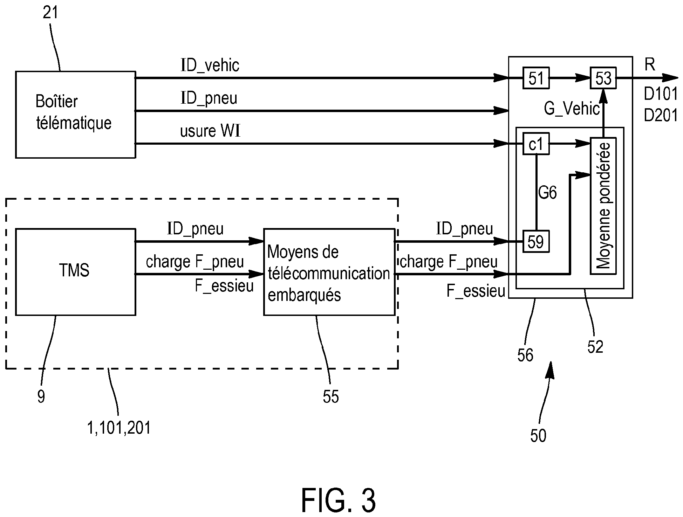

Un exemple de fonctionnement du procédé conforme à l'invention va maintenant être brièvement décrit en lien avec la variante de réalisation illustrée sur la figure 3.
Plusieurs véhicules postulants 1, 101, 201, ici par exemple trois véhicules, souhaitent former un peloton 2.
Au moins deux de ces véhicules postulants 1, 101, 201, et en particulier au moins deux des tracteurs 3, 103, 203, peuvent être de marques différentes (et plus particulièrement être issus de constructeurs de véhicules différents).
Chaque véhicule postulant 1, 101, 201 se signale au serveur distant 56 de formation de peloton en formulant une requête (demande d'adhésion à un peloton), qui est télétransmise à l'unité d'identification 51 dudit serveur distant 56 par les moyens de télécommunication 55 embarqués sur le véhicule postulant. Tout protocole adapté d'échange électronique d'information peut bien entendu être utilisé à cet effet.
Chaque véhicule postulant 1, 101, 201 communique à l'unité de caractérisation 52 du serveur distant 56 soit directement les indices d'adhérence sur sol mouillé G6, G106, G206 de ses pneumatiques 6, 106, 206, ou respectivement les indices d'adhérence sur sol mouillé de chacun de ses essieux 5, 105, 205, soit l'identifiant ID_pneu de ses pneumatiques 6, 106, 206, par essieu, à partir duquel le module d'acquisition 59 présent sur le serveur 56 peut, par recoupement avec une base de données, identifier les indices d'adhérence sur sol mouillé G6, G106, G206 correspondants.
A partir du dernier relevé d'usure WI connu, par exemple à partir du passage le plus récent du véhicule 1, 101, 201 sur un boîtier télématique 21, l'unité de caractérisation 52 corrige lesdits indices d'adhérence sur sol mouillé G6, G106, G206, en leur appliquant le coefficient de correction, lequel vaut de préférence ici (1-WI*c1), WI étant le degré d'usure applicable au pneumatique, ou à l'essieu, considéré.

Chaque véhicule 1, 101, 201 communique par ailleurs également au serveur 56 sa charge par essieu F_essieu, ou, le cas échéant, sa charge par pneumatique F_pneu, soit directement, soit par l'intermédiaire d'une station de pesage interconnectée avec le serveur 56.

L'unité de caractérisation 52 calcule alors la moyenne pondérée des indices d'adhérence sur sol mouillé, corrigés selon le degré d'usure WI, et pondérés par la charge applicable par essieu F_essieu, respectivement par pneumatique F_pneu.

L'unité de caractérisation 52 en déduit, pour chaque véhicule postulant, un indice global pondéré d'adhérence G vehic, qui est représentatif des performances de freinage sur sol mouillé dudit véhicule.

L'unité d'ordonnancement 53 compare alors entre eux les indices globaux pondérés d'adhérence sur sol mouillé G vehic(1), G vehic(101), G_vehic(201) des différents véhicules postulants 1, 101, 201, de sorte à en déduire l'ordre du peloton, et donc le rang R que ladite unité d'ordonnancement attribue à chaque véhicule postulant 1, 101, 201.

Ici, par exemple, si l'on a G_vehic(1) < G vehic(101) < G_vehic(201), alors, on décidera de placer le véhicule 1 (R=1) devant le véhicule 101 (R=2), lui-même devant le véhicule 201 (R=3).

En fonction de la vitesse de circulation visée, qui sera commune à tous les véhicules 1, 101, 201, l'unité d'ordonnancement 53 fixe en outre la distance inter-véhicules D101, D201 entre chaque véhicule suiveur et le véhicule qui le précède immédiatement (« véhicule prédécesseur »), tel que cela a été décrit plus haut.

Le serveur 56 de formation de peloton communique alors à chaque véhicule 1, 101, 201 son rang R dans le peloton 2 ainsi que la distance inter-véhicules D101, D201 que ledit véhicule doit respecter par rapport au véhicule du peloton qui le précède.

Les véhicules 1, 101, 201 s'alignent alors selon leur rang R respectif, et se positionnent les uns par rapport aux autres, à la vitesse considérée, selon les distances inter-véhicules D101, D201 qui leur sont imposées.

Bien entendu, ces paramètres de rang R et de distance inter-véhicules D101, D201 sont susceptibles d'être modifiés chaque fois que nécessaire, notamment lorsqu'un véhicule initialement suiveur remplace le véhicule initialement meneur en tête de convoi (quitte à ce que l'ordre du peloton ne corresponde plus exactement à l'ordre croissant des performances de freinage des véhicules), ou bien lorsqu'un ou plusieurs véhicules quittent le peloton 2, ou lorsqu'un ou plusieurs nouveaux véhicules postulants souhaitent rejoindre le peloton déjà formé.

Toutes les fonctions décrites dans ce qui précède, et notamment les fonctions d'identification, de collecte de paramètre de pneumatique, de calcul ou de correction d'indice d'adhérence, en particulier de calcul d'indice global pondéré d'adhérence sur sol mouillé G_vehic, et de détermination du rang R ou des distances inter-véhicules D101, D201, pourront être réalisée chacune par tout calculateur approprié, ledit calculateur pouvant être embarqué sur le véhicule 1 , 101, 201 concerné, ou situé sur un ou plusieurs serveurs 56 distants, ou bien encore partagé entre le véhicule et le serveur distant.

Bien entendu, l'invention n'est nullement limitée aux seules variantes de réalisation décrites dans ce qui précède. L'objet de l'invention est défini par les revendications suivantes.

**Revendications**

**1.** Procédé d'organisation d'un groupe de plusieurs véhicules (1, 101, 201) distincts selon un peloton (2), au sein duquel lesdits véhicules sont ordonnés en une file, et au sein duquel chaque véhicule qui suit au moins un autre véhicule dudit peloton (2) est capable d'adapter de manière automatique son comportement de conduite individuel en fonction du comportement de conduite d'un ou plusieurs véhicules du peloton qui le précèdent dans ladite file, ledit procédé étant mis en oeuvre par un système (50) de gestion de peloton de véhicules et comportant les étapes suivantes :

- une étape (a) d'identification par une unité d'identification (51) du système (50) de gestion, au cours de laquelle on identifie les véhicules devant former le peloton, dits « véhicules postulants » (1, 101, 201), chacun desdits véhicules postulants étant pourvu d'au moins un essieu (5, 105, 205) qui comprend au moins un pneumatique (6, 106, 206) assurant une liaison dudit véhicule postulant avec le sol (7),
- une étape (b) d'acquisition, par un module d'acquisition (59) d'une unité de caractérisation (52) du système (50) de gestion au cours de laquelle on acquiert, pour chaque véhicule postulant (1, 101, 201), au moins un paramètre de pneumatique (G6, G106, G206) lié audit au moins un pneumatique (6, 106, 206) assurant la liaison dudit véhicule postulant avec le sol (7), le paramètre de pneumatique (G6, G106, G206) étant représentatif d'une classe normalisée d'adhérence sur sol mouillé de l'au moins un pneumatique (6, 106, 206) concerné qui est indiquée sur le marquage identificateur du pneumatique (6, 106, 206) par exemple conformément au règlement européen CE-1222/2009, et on obtient à partir du paramètre de pneumatique un indice d'adhérence intrinsèque au pneumatique qui quantifie la capacité d'adhérence au sol du pneumatique (6, 106, 206) considéré lors d'un freinage, ledit indice d'adhérence considéré (G6, G106, G206) correspondant à un indice d'adhérence sur sol mouillé, par exemple l'indice d'adhérence sur sol mouillé défini par le règlement européen CE-228/2011 si le véhicule postulant (1, 101, 201) est un camion ou une camionnette, ledit indice d'adhérence intrinsèque au pneumatique (G6, G106, G206) correspondant à une valeur d'indice d'adhérence sur sol mouillé que l'on déduit de la classe d'adhérence sur sol mouillé,

- une étape (c) de traitement, par une unité d'ordonnancement (53) du système (50) de gestion, au cours de laquelle on détermine, à partir de l'indice d'adhérence intrinsèque au pneumatique (G6, G106, G206), le rang (R) attribué au véhicule postulant (1, 101, 201) considéré dans le peloton (2) et/ou la distance inter-véhicules (D101, D201) qui doit séparer, à une vitesse donnée, le véhicule postulant considéré (101, 201) du véhicule (1, 101) qui le précède immédiatement dans le peloton (2).

2. Procédé selon la revendication 1 **caractérisé en ce que** le véhicule postulant (1, 101, 201) considéré comprend une pluralité d'essieux (5_Z, 5_D, 5_T1, 5_T2) pourvus chacun d'au moins un pneumatique (6_Z, 6_D, 6_T1, 6_T2) assurant la liaison dudit véhicule postulant (1, 101, 201) avec le sol (7), **en ce que** l'on collecte, lors de l'étape (b) d'acquisition, un indice d'adhérence (G6_Z, G6_D, G6_T1, G6_T2) de l'au moins un pneumatique de chaque essieu, respectivement on collecte un indice d'adhérence de chacun des pneumatiques du véhicule postulant qui assurent une liaison avec le sol, **en ce que** l'on évalue la charge (F_Z, F_D, F_T1, F_T2) qui est exercée par le véhicule (1) sur chacun desdits essieux (5_Z, 5_D, 5_T1, 5_T2), respectivement sur chacun des pneumatiques, et **en ce que** l'on calcule un indice global pondéré d'adhérence (G_vehic), qui correspond à la moyenne pondérée, sur l'ensemble des essieux (5_Z, 5_D, 5_T1, 5_T2) du véhicule postulant (1, 101, 201) considéré, respectivement sur l'ensemble des pneumatiques du véhicule postulant, des indices d'adhérence (G6_Z, G6_D, G6_T1, G6_T2), de préférence des indices d'adhérence sur sol mouillé, qui sont propres à chacun des essieux, respectivement qui sont propres à chaque pneumatique, pondérés par la charge (F_Z, F_D, F_T1, F_T2) qui est appliquée à l'essieu considéré, respectivement pondérés par la charge qui est appliquée au pneumatique considéré.

3. Procédé selon la revendication 2 **caractérisé en ce que** la charge (F_Z, F_D, F_T1, F_T2) exercée sur chaque essieu (5_Z, 5_D, 5_T1), respectivement sur chaque pneumatique (6_Z, 6_D, 6_T1, 6_T2), est évaluée à partir d'une pesée, ou à partir d'une information de charge qui est mise à disposition sur un réseau informatique (57) du véhicule par un système embarqué sur le véhicule, tel que par exemple un système d'asservissement de suspension (10) destiné à ajuster l'assiette de tout ou partie du véhicule (1) en fonction de la charge de ce dernier.

4. Procédé selon l'une des revendications 1 à 3 **caractérisé en ce que** l'on ordonne les véhicules (1, 101, 201) dans le peloton (2) par ordre croissant de leur indice d'adhérence (G6, G106, G206), respectivement par ordre croissant de leur indice global pondéré d'adhérence (G_vehic(1), G vehic(101), G_vehic(201)), et plus préférentiellement par ordre croissant de leur indice global pondéré d'adhérence sur sol mouillé.

5. Procédé selon l'une des revendications 1 à 4 **caractérisé en ce que** l'on évalue, pour chaque véhicule postulant (1, 101, 201), une distance d'arrêt caractéristique, en fonction d'une vitesse de circulation visée et de l'indice d'adhérence (G6, G106, G206) dudit véhicule, respectivement en fonction d'une vitesse de circulation visée et de l'indice global pondéré d'adhérence (G_vehic), et l'on compare deux à deux les distances d'arrêt caractéristiques des véhicules postulants qui doivent se succéder dans le peloton (2) afin de déterminer, pour chaque véhicule postulant, la distance inter-véhicules (D101, D201) minimale qui doit séparer, à la vitesse considérée, ledit véhicule postulant considéré (101, 201) du véhicule qui le précède immédiatement dans le peloton (1, 101).

6. Procédé selon l'une des revendications précédentes **caractérisé en ce que** l'on prend en considération, pour organiser le peloton (2), le degré d'usure (WI) de l'au moins un pneumatique (6, 106, 206) considéré.

7. Procédé selon la revendication 6 **caractérisé en ce que** l'on corrige l'indice d'adhérence sur sol mouillé en lui appliquant un coefficient de correction qui décroît, selon une loi prédéterminée, lorsque le degré d'usure (WI) du pneumatique augmente.

8. Système (50) de gestion de peloton de véhicules destiné à organiser un peloton (2) de plusieurs véhicules (1, 101, 201) distincts, pourvus chacun d'au moins un essieu (5, 105, 205) qui comprend au moins un pneumatique (6, 106, 206) assurant une liaison dudit véhicule avec le sol (7), ledit système (50) étant **caractérisé en ce qu'**il comprend les unités de traitement électronique suivantes :

- une unité d'identification (51) qui est configurée pour identifier et recenser les véhicules (1, 101, 201) devant former le peloton (2), dits « véhicules postulants »,
- une unité de caractérisation (52) comportant un module d'acquisition d'indice d'adhérence (59) qui est configuré pour collecter, pour chaque véhicule postulant (1, 101, 201), au moins un paramètre de pneumatique (G6, G106, G206) lié audit au moins un pneumatique (6, 106, 206) assurant la liaison dudit véhicule postulant avec le sol (7), le paramètre de pneumatique étant représentatif d'une classe normalisée d'adhérence sur sol mouillé de l'au moins un pneumatique (6, 106, 206) concerné qui est indiquée sur le marque identificateur du pneumatique (6, 106, 206) par exemple conformément au règlement européen CE-1222/2009, et obtenir à partir du paramètre de pneumatique un indice d'adhérence intrinsèque au pneumatique qui quantifie la capacité d'adhérence au sol du pneumatique (6, 106, 206) considéré lors d'un freinage, ledit indice d'adhérence considéré (G6, G106, G206) correspondant à un indice d'adhérence sur sol mouillé, par exemple l'indice d'adhérence sur sol mouillé défini par le règlement européen CE-228/2011 si le véhicule postulant (1, 101, 201) est un camion ou une camionnette, ledit indice d'adhérence (G6, G106, G206) correspondant à une valeur d'indice d'adhérence sur sol mouillé que l'on déduit de la classe d'adhérence sur sol mouillé normalisée,
- une unité d'ordonnancement (53) qui est configurée pour déterminer, à partir de l'indice d'adhérence intrinsèque au pneumatique, un rang (R) qu'elle est configurée pour assigner au véhicule postulant considéré dans le peloton et/ou une consigne de distance inter-véhicules (D101, D201) qui fixe la distance qui doit séparer, à une vitesse donnée, le véhicule postulant considéré (101, 201) du véhicule (1, 101) qui le précède immédiatement dans le peloton (2).

9. Système de gestion de peloton selon la revendication 8 **caractérisé en ce que** le paramètre de pneumatique (G6, G106, G206) est obtenu par télétransmission à partir d'une information transmise par un transpondeur (9) implanté dans le pneumatique (6, 106, 206) considéré.

**Patentansprüche**

1. Verfahren zur Organisation einer Gruppe von mehreren verschiedenen Fahrzeugen (1, 101, 201) zu einer Kolonne (2), in der die Fahrzeuge in einer Schlange geordnet sind und in der jedes Fahrzeug, das mindestens einem anderen Fahrzeug der Kolonne (2) folgt, in der Lage ist, sein individuelles Fahrverhalten in Abhängigkeit von dem Fahrverhalten eines oder mehrerer Fahrzeuge der Kolonne, die ihm in der Schlange vorausfahren, automatisch anzupassen, wobei das Verfahren von einem System (50) zur Verwaltung einer Kolonne von Fahrzeugen durchgeführt wird und die folgenden Schritte umfasst:

- einen Schritt (a) des Identifizierens, durch eine Identifizierungseinheit (51) des Systems (50) zur Verwaltung, bei dem die Fahrzeuge, die die Kolonne bilden sollen, "Kandidatenfahrzeuge" (1, 101, 201) genannt, identifiziert werden, wobei jedes der Kandidatenfahrzeuge mit mindestens einer Achse (5, 105, 205) versehen ist, die mindestens einen Reifen (6, 106, 206) umfasst, der eine Verbindung des Kandidatenfahrzeugs mit dem Boden (7) gewährleistet,
- einen Schritt (b) des Erfassens, durch ein Erfassungsmodul (59) einer Charakterisierungseinheit (52) des Systems (50) zur Verwaltung, bei dem für jedes Kandidatenfahrzeug (1, 101, 201) mindestens ein Reifenparameter (G6, G106, G206) erfasst wird, der mit dem mindestens einen Reifen (6, 106, 206) zusammenhängt, der die Verbindung des Kandidatenfahrzeugs mit dem Boden (7) gewährleistet, wobei der Reifenparameter (G6, G106, G206) für eine genormte Haftungsklasse auf nassem Boden des betreffenden mindestens einen Reifens (6, 106, 206) repräsentativ ist, die auf dem Kennzeichnungslabel des Reifens (6, 106, 206) angegeben ist, zum Beispiel gemäß der europäischen Verordnung EG-1222/2009, und ausgehend von dem Reifenparameter ein intrinsischer Haftungskennwert des Reifens erhalten wird, der die Bodenhaftungskapazität des betrachteten Reifens (6, 106, 206) bei einer Bremsung bemisst, wobei der betrachtete Haftungskennwert (G6, G106, G206) einem Haftungskennwert auf nassem Boden entspricht, zum Beispiel dem durch die europäische Verordnung EG-228/2011 definierten Haftungskennwert auf nassem Boden, wenn das Kandidatenfahrzeug (1, 101, 201) ein Lastkraftwagen oder ein Kleintransporter ist, wobei der intrinsische Haftungskennwert des Reifens (G6, G106, G206) einem Wert des Haftungskennwerts auf nassem Boden entspricht, der aus der Haftungsklasse auf nassem Boden abgeleitet wird,
- einen Schritt (c) des Verarbeitens, durch eine Dispositionseinheit (53) des Systems (50) zur Verwaltung, bei dem ausgehend von dem intrinsischen Haftungskennwert des Reifens (G6, G106, G206) der Rang (R) bestimmt wird, der dem betrachteten Kandidatenfahrzeug (1, 101, 201) in der Kolonne (2) zugewiesen wird, und/oder der Fahrzeugabstand (D101, D201), der bei einer gegebenen Geschwindigkeit das betrachtete Kandidatenfahrzeug (101, 201) von dem Fahrzeug (1, 101), das ihm in der Kolonne (2) unmittelbar vorausfährt, trennen muss.

**2.** Verfahren nach Anspruch 1, **dadurch gekennzeichnet, dass** das betrachtete Kandidatenfahrzeug (1, 101, 201) eine Mehrzahl von Achsen (5_Z, 5_D, 5_T1, 5_T2) umfasst, die jeweils mit mindestens einem Reifen (6_Z, 6_D, 6_T1, 6_T2) versehen sind, der die Verbindung des Kandidatenfahrzeugs (1, 101, 201) mit dem Boden (7) gewährleistet, dass bei dem Schritt (b) des Erfassens ein Haftungskennwert (G6_Z, G6_D, G6_T1, G6_T2) des mindestens einen Reifens jeder Achse erfasst wird beziehungsweise ein Haftungskennwert jedes der Reifen des Kandidatenfahrzeugs, die eine Verbindung mit dem Boden gewährleisten, erfasst wird, dass die Last (F_Z, F_D, F_T1, F_T2) bewertet wird, die von dem Fahrzeug (1) auf jede der Achsen (5_Z, 5_D, 5_T1, 5_T2) beziehungsweise auf jeden der Reifen ausgeübt wird, dass ein gewichteter globaler Haftungskennwert (G_vehic) berechnet wird, der dem gewichten Mittelwert, über alle Achsen (5_Z, 5_D, 5_T1, 5_T2) des betrachteten Kandidatenfahrzeugs (1, 101, 201) beziehungsweise über alle Reifen des Kandidatenfahrzeugs, der Haftungskennwerte (G6_Z, G6_D, G6_T1, G6_T2), bevorzugt der Haftungskennwerte auf nassem Boden, entspricht, die spezifisch für jede der Achsen sind beziehungsweise die spezifisch für jeden Reifen sind, die durch die Last (F_Z, F_D, F_T1, F_T2) gewichtet werden, die an die betrachtete Achse angelegt wird, beziehungsweise durch die Last gewichtet werden, die an den betrachteten Reifen angelegt wird.

**3.** Verfahren nach Anspruch 2, **dadurch gekennzeichnet, dass** die Last (F_Z, F_D, F_T1, F_T2), die auf jede Achse (5_Z, 5_D, 5_T1) beziehungsweise auf jeden Reifen (6_Z, 6_D, 6_T1, 6_T2) ausgeübt wird, ausgehend von einem Wägen bewertet wird oder ausgehend von einer Lastinformation, die in einem Datennetz (57) des Fahrzeugs von einem bordeigenen System des Fahrzeugs bereitgestellt wird, wie etwa einem Federungsregelungssystem (10), das dazu bestimmt ist, die Höhenlage des gesamten oder eines Teils des Fahrzeugs (1) in Abhängigkeit von dessen Last anzupassen.

**4.** Verfahren nach einem der Ansprüche 1 bis 3, **dadurch gekennzeichnet, dass** die Fahrzeuge (1, 101, 201) in der Kolonne (2) in aufsteigender Reihenfolge ihres Haftungskennwerts (G6, G106, G206), beziehungsweise in aufsteigender Reihenfolge ihres gewichteten globalen Haftungskennwerts (G_vehic(1), G_vehic(101), G_vehic(201)) und besonders bevorzugt in aufsteigender Reihenfolge ihres gewichteten globalen Haftungskennwerts auf nassem Boden geordnet werden.

**5.** Verfahren nach einem der Ansprüche 1 bis 4, **dadurch gekennzeichnet, dass** für jedes Kandidatenfahrzeug (1, 101, 201) ein charakteristischer Anhalteweg in Abhängigkeit von einer angestrebten Fahrgeschwindigkeit und von dem Haftungskennwert (G6, G106, G206) des Fahrzeugs beziehungsweise in Abhängigkeit von einer angestrebten Fahrgeschwindigkeit und von dem gewichteten globalen Haftungskennwert (G_vehic) bewertet wird und die charakteristischen Anhaltewege der Kandidatenfahrzeuge, die in der Kolonne (2) aufeinander folgen sollen, paarweise verglichen werden, um für jedes Kandidatenfahrzeug den minimalen Fahrzeugabstand (D101, D201) zu bestimmen, der bei der betrachteten Geschwindigkeit das betrachtete Kandidatenfahrzeug (101, 201) von dem Fahrzeug, das ihm in der Kolonne (1, 101) unmittelbar vorausfährt, trennen muss.

**6.** Verfahren nach einem der vorhergehenden Ansprüche, **dadurch gekennzeichnet, dass** beim Organisieren der Kolonne (2) der Verschleißgrad (WI) des mindestens einen betrachteten Reifens (6, 106, 206) berücksichtigt wird.

**7.** Verfahren nach Anspruch 6, **dadurch gekennzeichnet, dass** der Haftungskennwert auf nassem Boden korrigiert wird, indem ein Korrekturbeiwert auf ihn angewandt wird, der nach einer vorbestimmten Gesetzmäßigkeit mit zunehmendem Verschleißgrad (WI) des Reifens abnimmt.

**8.** System (50) zur Verwaltung einer Kolonne von Fahrzeugen, das dazu bestimmt ist, eine Kolonne (2) von mehreren verschiedenen Fahrzeugen (1, 101, 201) zu organisieren, die jeweils mit mindestens einer Achse (5, 105, 205) versehen sind, die mindestens einen Reifen (6, 106, 206) umfasst, der eine Verbindung des Fahrzeugs mit dem Boden (7) gewährleistet, wobei das System (50) **dadurch gekennzeichnet ist, dass** es die folgenden Einheiten zur elektronischen Verarbeitung umfasst:

- eine Identifizierungseinheit (51), die dazu ausgelegt ist, die Fahrzeuge (1, 101, 201), die die Kolonne (2) bilden sollen, "Kandidatenfahrzeuge" genannt, zu identifizieren und zu zählen,
- eine Charakterisierungseinheit (52), die ein Haftungskennwert-Erfassungsmodul (59) beinhaltet, das dazu ausgelegt ist, für jedes Kandidatenfahrzeug (1, 101, 201) mindestens ein Reifenparameter (G6, G106, G206) zu erfassen, der mit dem mindestens einen Reifen (6, 106, 206) zusammenhängt, der die Verbindung des Kandidatenfahrzeugs mit dem Boden (7) gewährleistet, wobei der Reifenparameter für eine genormte Haftungsklasse auf nassem Boden des betreffenden mindestens einen Reifens (6, 106, 206) repräsentativ ist, die auf dem Kennzeichnungslabel des Reifens (6, 106, 206) angegeben ist, zum Beispiel gemäß der europäischen Verordnung EG-1222/2009, und ausgehend von dem Reifenparameter einen intrinsischen Haftungskennwert des Reifens zu erhalten, der die Bodenhaftungskapazität des betrachteten Reifens (6, 106, 206) bei einer Bremsung bemisst, wobei der betrachtete Haftungskennwert (G6, G106, G206) einem Haftungskennwert auf nassem Boden entspricht, zum Beispiel dem durch die europäische Verordnung EG-228/2011 definierten Haftungskennwert auf nassem Boden, wenn das Kandidatenfahrzeug (1, 101, 201) ein Lastkraftwagen oder ein Kleintransporter ist, wobei der Haftungskennwert (G6, G106, G206) einem Wert des Haftungskennwerts auf nassem Boden entspricht, der aus der genormten Haftungsklasse auf nassem Boden abgeleitet wird,
- eine Dispositionseinheit (53), die dazu ausgelegt ist, ausgehend von dem intrinsischen Haftungskennwert des Reifens einen Rang (R) zu bestimmen, den sie auslegungsgemäß dem betrachteten Kandidatenfahrzeug in der Kolonne zuweisen soll, und/oder einen Sollwert des Fahrzeugabstands (D101, D201, der den Abstand festlegt, der das betrachtete Kandidatenfahrzeug (101, 201) bei einer gegebenen Geschwindigkeit von dem Fahrzeug (1, 101), das ihm in der Kolonne (2) unmittelbar vorausfährt, trennen muss.

**9.** System zur Verwaltung einer Kolonne nach Anspruch 8, **dadurch gekennzeichnet, dass** der Reifenparameter (G6, G106, G206) durch Fernübertragung ausgehend von einer Information erhalten wird, die von einem in den betrachteten Reifen (6, 106, 206) integrierten Transponder (9) übertragen wird.

**Claims**

**1.** Method for organizing a group of several distinct vehicles (1, 101, 201) into a platoon (2) within which said vehicles are ordered into a line, and within which each vehicle which follows at least one other vehicle of said platoon (2) is capable of automatically adapting its individual driving behaviour as a function of the driving behaviour of one or more vehicles of the platoon that precede it in said line, said method being implemented by a vehicle platoon management system (50) and comprising the following steps:

- a step (a) of identification by an identification unit (51) of the management system (50), during which step the vehicles that are to form the platoon, referred to as "candidate vehicles" (1, 101, 201) are identified, each of said candidate vehicles being provided with at least one axle (5, 105, 205) which comprises at least one tyre (6, 106, 206) providing contact between said candidate vehicle and the ground (7),
- a step (b) of acquisition, by an acquisition module (59) of a characterization unit (52) of the management system (50), during which step there is acquired, for each candidate vehicle (1, 101, 201), at least one tyre parameter (G6, G106, G206) associated with said at least one tyre (6, 106, 206) providing the contact between said candidate vehicle and the ground (7), the tyre parameter (G6, G106, G206) being representative of a standardized wet grip class of the at least one tyre (6, 106, 206) concerned, as indicated on the identifying marking of the tyre (6, 106, 206), for example in accordance with European regulation EC-1222/2009, and from the tyre parameter there is obtained a tyre-intrinsic grip index that quantifies the braking grip capacity of the tyre (6, 106, 206) concerned, said grip index (G6, G106, G206) concerned corresponding to a wet grip index, for example the wet grip index defined by European regulation EC-228/2011 if the candidate vehicle (1, 101, 201) is a lorry or a van, said tyre-intrinsic grip index (G6, G106, G206) corresponding to a wet grip index value that is deduced from the wet grip class,
- a step (c) of processing, by a scheduling unit (53) of the management system (50), during which step the tyre-intrinsic grip index (G6, G106, G206) is used as a basis by means of which to determine the rank (R) assigned to the candidate vehicle (1, 101, 201) concerned in the platoon (2) and/or the inter-vehicle distance (D101, D201) that is to separate, at a given speed, the candidate vehicle (101, 201) concerned from the vehicle (1, 101) that immediately precedes it in the platoon (2).

**2.** Method according to Claim 1, **characterized in that** the candidate vehicle (1, 101, 201) concerned comprises a plurality of axles (5_Z, 5_D, 5_T1, 5_T2) each provided with at least one tyre (6_Z, 6_D, 6_T1, 6_T2) providing contact between said candidate vehicle (1, 101, 201) and the ground (7), **in that** there are collected, during the acquisition step (b), a grip index (G6_Z, G6_D, G6_T1, G6_T2) for the at least one tyre from each axle, or, respectively, there are collected a grip index for each of the tyres of the candidate vehicle that provide contact with the ground, **in that** the load (F_Z, F_D, F_T1, F_T2) that the vehicle (1) exerts on each of said axles (5_Z, 5_D, 5_T1, 5_T2), or, respectively, on each of the tyres, is evaluated, and **in that** a weighted overall grip index (G_vehic), that corresponds to the weighted mean, across all of the axles (5_Z, 5_D, 5_T1, 5_T2) of the candidate vehicle (1, 101, 201) considered or, respectively, across all of the tyres of the candidate vehicle, is calculated from the grip indexes (G6_Z, G6_D, G6_T1, G6_T2), preferably from the wet grip indexes, specific to each of the axles or, respectively, specific to each tyre, weighted by the load (F_Z, F_D, F_T1, F_T2) that is applied to the axle concerned or, respectively, weighted by the load that is applied to the tyre concerned.

3. Method according to Claim 2, **characterized in that** the load (F_Z, F_D, F_T1, F_T2) exerted on each axle (5_Z, 5_D, 5_T1) or, respectively, on each tyre (6_Z, 6_D, 6_T1, 6_T2), is evaluated by weighing, or from loading information available on a computer network (57) of the vehicle by a system carried on board the vehicle, such as, for example, a suspension control system (10) intended to adjust the attitude of all or part of the vehicle (1) on the basis of the loading of said vehicle.

4. Method according to one of Claims 1 to 3, **characterized in that** the vehicles (1, 101, 201) are ordered within the platoon (2) in increasing order of grip index (G6, G106, G206) or, respectively, in increasing order of weighted overall grip index (G_vehic(1), G_vehic(101), G_vehic(201)), and more preferably in increasing order of weighted overall wet grip index.

5. Method according to one of Claims 1 to 4, **characterized in that** a characteristic stopping distance is evaluated for each candidate vehicle (1, 101, 201) as a function of a target running speed and of the grip index (G6, G106, G206) of said vehicle or, respectively, as a function of a target running speed and of the weighted overall grip index (G_vehic), and the characteristic stopping distances of the candidate vehicles that are to succeed one another in the platoon (2) are compared pairwise in order to determine, for each candidate vehicle, the minimum inter-vehicle distance (D101, D201) that must, at the speed concerned, separate said candidate vehicle (101, 201) concerned from the vehicle (1, 101) that immediately precedes it in the platoon.

6. Method according to one of the preceding claims, **characterized in that**, when organizing the platoon (2), consideration is given to the wear intensity (WI) of the at least one tyre (6, 106, 206) concerned.

7. Method according to Claim 6, **characterized in that** the wet grip index is corrected by applying to it a correction coefficient which decreases, following a predetermined law, as the wear intensity (WI) of the tyre increases.

8. System (50) for managing a platoon of vehicles, intended to organize a platoon (2) of several distinct vehicles (1, 101, 201) each provided with at least one axle (5, 105, 205) which comprises at least one tyre (6, 106, 206) providing contact between said vehicle and the ground (7), said system (50) being **characterized in that** it comprises the following electronic processing units:

- an identification unit (51) which is configured to identify and take stock of the vehicles (1, 101, 201) that are to form the platoon (2), referred to as "candidate vehicles",
- a characterization unit (52) comprising a grip index acquisition module (59) which is configured to collect, for each candidate vehicle (1, 101, 201), at least one tyre parameter (G6, G106, G206) associated with said at least one tyre (6, 106, 206) forming the contact between said candidate vehicle and the ground (7), the tyre parameter being representative of a standardized wet grip class of the at least one tyre (6, 106, 206) concerned, as indicated on the identifying marking of the tyre (6, 106, 206), for example in accordance with European regulation EC-1222/2009, and to obtain, from the tyre parameter, a tyre-intrinsic grip index that quantifies the braking grip capacity of the tyre (6, 106, 206) concerned, said grip index (G6, G106, G206) concerned corresponding to a wet grip index, for example the wet grip index defined by European regulation EC-228/2011 if the candidate vehicle (1, 101, 201) is a lorry or a van, said grip index (G6, G106, G206) corresponding to a wet grip index value that is deduced from the standardized wet grip class,
- a scheduling unit (53) which is configured to determine, from the tyre-intrinsic grip index, a rank (R) that it is configured to assign to the candidate vehicle concerned in the platoon and/or an inter-vehicle distance setpoint value (D101, D201) that sets the distance that is to separate, at a given speed, the candidate vehicle (101, 201) concerned from the vehicle (1, 101) that immediately precedes it in the platoon (2).

9. Platoon management system according to Claim 8, **characterized in that** the tyre parameter (G6, G106, G206) is obtained by telematic transmission from information transmitted by a transponder (9) implanted in the tyre (6, 106, 206) concerned.

FIG. 1

FIG. 2

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9632507 B

- US 5777451 A